# EUROPÄISCHE PATENTSCHRIFT

(11) **EP 3 835 116 B1**
(45) Veröffentlichungstag und Bekanntmachung des Hinweises auf die Patenterteilung: **17.07.2024**
(21) Anmeldenummer: 20000446.3
(22) Anmeldetag: 09.12.2020
(51) Int. Cl.: B60N 2/02, B60N 2/10, B60N 2/50, B60N 2/52, B60N 2/39

(54) **FAHRZEUGSITZ MIT SCHERENGESTELLANORDNUNG**
VEHICLE SEAT WITH FRAME ARRANGEMENT
SIÈGE DE VÉHICULE POURVU DE DISPOSITIF SUPPORT À LEVIERS CROISÉS

(30) Priorität: 13.12.2019 DE 102019134244
(43) Veröffentlichungstag der Anmeldung: 16.06.2021
(73) Patentinhaber: GRAMMER AG, 92289 Ursensollen (DE)
(72) Erfinder: Dotzler, Florian, 92242 Hirschau (DE); Krivenkov, Konstantin, 92224 Amberg (DE)
(74) Vertreter: Hannke Bittner & Partner mbB Regensburg

(56) Entgegenhaltungen:
- WO-A1-2009/054788
- SE-C2- 528 418
- US-A- 5 975 508

## Beschreibung

Die Erfindung betrifft einen Fahrzeugsitz umfassend ein Fahrzeugsitzoberteil und ein Fahrzeugsitzunterteil, welche entlang einer Höhenachse Z beabstandet sind und mittels einer Scherengestellanordnung miteinander verbunden sind, wobei die Scherengestellanordnung zumindest eine Innenschwinge und zumindest eine Außenschwinge umfasst.

Derartige Fahrzeugsitze sind insbesondere in Nutzfahrzeugen wie beispielsweise Traktoren, Baumaschinen, Stapler, Lastkraftwagen usw. vorgesehen. Insbesondere Fahrersitze, in welchen der Fahrzeugführer unter Umständen lange Zeiten verbringt, müssen in der Regel besonderen Bedingungen genügen. Der Fahrzeugführer ist körperlichen Belastungen aufgrund von Schwingungseinwirkungen, bedingt durch den Zustand der Fahrstrecke, ausgesetzt. Derartige Schwingungseinwirkungen sollen unter anderem durch den Fahrersitz vermindert werden.

Entsprechende Schwingungsbelastungen umfassen vertikale Schwingungen des Fahrzeugsitzoberteils entlang der Höhenachse (Z), rotatorische Schwingungen aufgrund einer Wankbewegung des Fahrzeugsitzoberteils um die Längsachse (X) und rotatorische Schwingungen aufgrund einer Nickbewegung des Fahrzeugsitzoberteils um eine Breitenachse (Y).

Das Dokument SE 528 418 C2 beschreibt einen Fahrzeugsitz umfassend ein Fahrzeugsitzunterteil und ein Fahrzeugsitzoberteil mit einer einstellbaren Höhe und einem einstellbaren Neigungswinkel, wodurch ein erster und ein zweiter Scherenarm mit dem Fahrzeugoberteil und -unterteil verbunden ist, wobei der erste Scherenarm mit einem Scherengelenk verbunden ist und der zweite Scherenarm mit einem Kipparm gelagert ist.

Aufgabe der vorliegenden Erfindung ist es einen Fahrzeugsitz bereitzustellen, welcher eine Verminderung der Schwingungsbelastungen, beziehungsweise Schwingungsisolation für den Insassen ermöglicht.

Die Aufgabe wird gelöst von einem Fahrzeugsitz mit den Merkmalen des Patentanspruchs 1. Der erfindungsgemäße Fahrzeugsitz umfasst ein Fahrzeugsitzoberteil und ein Fahrzeugsitzunterteil, welche entlang einer Höhenachse (Z) voneinander beabstandet sind und mittels einer Scherengestellanordnung miteinander verbunden sind, wobei die Scherengestellanordnung zumindest eine Innenschwinge und zumindest eine Außenschwinge umfasst, wobei die zumindest eine Innenschwinge und die zumindest eine Außenschwinge mechanisch gekoppelt sind, wodurch ein Neigungswinkel (ξ) des Fahrzeugsitzoberteils relativ zum Fahrzeugsitzunterteil vorgebbar ist, wobei die mechanische Kopplung ein Armelement und ein damit schwenkbar verbundenes erstes Verbindungselement umfasst, wobei durch eine Länge (L) des ersten Verbindungselements der Neigungswinkel (ξ) vorgebbar ist.

Der Neigungswinkel kann dabei vorteilhafterweise der Nickwinkel sein. Bei einer Nickbewegung verkippt das Fahrzeugsitzoberteil relativ zu dem Fahrzeugsitzunterteil um die Breitenachse (Y). Ebenso kann bei einer Nickbewegung das Fahrzeugsitzoberteil horizontal ausgerichtet bleiben und das Fahrzeugsitzunterteil relativ zu dem Fahrzeugsitzoberteil um die Breitenachse (Y) verkippen. Durch die erfindungsgemäße mechanische Kopplung kann der Neigungswinkel (ξ), beziehungsweise der Nickwinkel auf eine äußerst einfache Art und Weise vorgegeben werden.

Vorzugsweise ist das Armelement an der zumindest einen Innenschwinge angeordnet und das erste Verbindungselement an der zumindest einen Außenschwinge. Alternativ kann das Armelement an der zumindest einen Außenschwinge angeordnet sein und das erste Verbindungselement an der zumindest einen Innenschwinge. Bevorzugt ist das Armelement um eine Drehachse drehbar an der zumindest einen Innenschwinge oder der zumindest einen Außenschwinge angeordnet. Bevorzugt ist das erste Verbindungselement um eine Drehachse drehbar an der zumindest einen Innenschwinge oder der zumindest einen Außenschwinge angeordnet.

Weiterhin wäre es denkbar, dass die Scherengestellanordnung jeweils ein Innenschwingenpaar und ein Außenschwingenpaar umfasst. Dabei wäre es weiterhin denkbar, dass das Armelement an beiden Innenschwingen oder an nur einer Innenschwinge des Innenschwingenpaars angeordnet ist. Ebenso kann das Armelement an beiden Außenschwingen oder an nur einer Außenschwinge des Außenschwingenpaars angeordnet sein. Analog kann das erste Verbindungselement an beiden Innenschwingen oder an nur einer Innenschwinge des Innenschwingenpaars angeordnet sein beziehungsweise an beiden Außenschwingen oder an nur einer Außenschwinge des Außenschwingenpaars angeordnet sein.

Vorzugsweise erstreckt sich das Armelement entlang der Längsachse (X) und geneigt entlang der Höhenachse (Z) nach unten. Bei einer horizontalen Ausrichtung des Fahrzeugsitzoberteils kann das Armelement bevorzugt im Wesentlichen parallel zu einer Schwinge sich erstrecken. Bevorzugt sind das Armelement und das Verbindungselement im Wesentlichen dreiecksförmig angeordnet. Vorzugsweise erstreckt sich ein Winkel µ zwischen dem Armelement und dem Verbindungselement, beziehungsweise zwischen deren Mittelachsen. Der Winkel (µ) ist abhängig von dem Neigungswinkel (ξ). Bevorzugt liegt der Winkel µ in einem Bereich zwischen 10° und 90°. Vorteilhafterweise erstreckt sich zwischen dem Verbindungselement, beziehungsweise einer Mittelachse des Verbindungselements und dem Fahrzeugsitzunterteil ein Anstellwinkel (λ). Bei einer Neigungsveränderung des Fahrzeugsitzoberteils ändert sich ein Anstellwinkel (λ) entsprechend dem Neigungswinkel (ξ). Bevorzug liegt der Anstellwinkel (λ) in einem Bereich zwischen 10° und 90°.

Nach einer bevorzugten Ausführungsform sind die zumindest eine Innenschwinge und die zumindest eine Außenschwinge durch ein zweites Verbindungselement verbunden, welches um jeweils eine sich entlang einer Breitenrichtung (Y) erstreckende erste, beziehungsweise zweite Drehachse relativ zu der zumindest einen Innenschwinge und relativ zu der zumindest einen Außenschwinge drehbar ist. Vorzugsweise kreuzen sich die zumindest eine Innenschwinge und die zumindest eine Außenschwinge in einem Kreuzungsbereich. Vorteilhafterweise sind zumindest in einer Ruheposition die erste Drehachse und die zweite Drehachse entlang der Höhenachse (Z) über dem Kreuzungsbereich oder entlang der Höhenachse (Z) unter dem Kreuzungsbereich angeordnet. Vorteilhafterweise ist zumindest in der Ruheposition das Verbindungselement im Wesentlichen mittig bezüglich eines Abstandes zwischen dem Fahrzeugsitzoberteil und dem Fahrzeugsitzunterteil angeordnet. Dementsprechend ist es bevorzugt, dass die zumindest eine Innenschwinge und die zumindest eine Außenschwinge derart ausgebildet sind, dass zumindest in der Ruheposition der Kreuzungsbereich außermittig bezüglich des Abstandes zwischen dem Fahrzeugsitzoberteil und dem Fahrzeugsitzunterteil angeordnet ist. Bevorzugt weisen zumindest in einer Ruheposition die erste Drehachse und die zweite Drehachse einen vorgegebenen Abstand entlang der Höhenachse (Z) zu dem Fahrzeugsitzunterteil auf. Dieser vorgegebene Abstand kann vorteilhafterweise der gleiche Abstand sein. Demnach wäre das Verbindungselement in der Ruheposition nicht verschwenkt, wodurch die beiden Drehachsen auf der gleichen Höhe angeordnet sind. Denkbar wäre jedoch auch, dass in der Ruheposition das Fahrzeugsitzoberteil relativ zu dem Fahrzeugsitzunterteil eine Verkippung aufweisen soll. Dies kann bei einer bestimmten Präferierten Sitzneigung der Fall sein. Das erste Verbindungselement würde demnach vorteilhafterweise eine entsprechende Länge aufweisen. Der vorgegebene Abstand der ersten Drehachse und der zweiten Drehachse zu dem Fahrzeugsitzunterteil würde sich dann vorteilhafterweise aus der vorgegebenen Sitzneigung ergeben.

Nach einer bevorzugten Ausführungsform wird bei einer Nickbewegung das Fahrzeugsitzoberteil um eine Nickachse relativ zu dem Fahrzeugsitzunterteil verkippt. Bevorzugt wird bei dieser Nickbewegung das zweite Verbindungselement um die erste Drehachse und um die zweite Drehachse gedreht. Demnach kann vorteilhafterweise durch die schwenkbewegliche Verbindung der zumindest einen Innenschwinge und der zumindest einen Außenschwinge eine Nickbewegung des Fahrzeugsitzoberteils relativ zu dem Fahrzeugsitzunterteil in eine Drehbewegung des Verbindungselement um eine erste Drehachse relativ zu der zumindest einen Innenschwinge und um eine zweite Drehachse relativ zu der zumindest einen Außenschwinge übersetzt, beziehungsweise umgewandelt werden.

Erfindungsgemäß sind die zumindest eine Innenschwinge und die zumindest eine Außenschwinge jeweils mittels zumindest einer unteren Loslagerung an dem Fahrzeugsitzunterteil angeordnet. Weiterhin sind die zumindest eine Innenschwinge und die zumindest eine Außenschwinge jeweils mittels zumindest einer oberen Loslagerung an dem Fahrzeugsitzoberteil angeordnet. Die zumindest eine Innenschwinge oder die zumindest eine Außenschwinge ist mittels einer Festlagerung mit dem Fahrzeugsitzunterteil verbunden. Dabei ist die zumindest eine Innenschwinge oder die zumindest eine Außenschwinge mittels einer weiteren Festlagerung mit dem Fahrzeugsitzoberteil verbunden ist.

Nach einer weiteren vorteilhaften Ausführungsform ist das obere Festlager starr mit dem Armelement verbunden. Bevorzugt umfasst das obere Festlager ein zweites Armelement, welches starr mit dem ersten Armelement der mechanischen Kopplung verbunden ist. Das erste und das zweite Armelement könnten vorteilhafterweise auch einstückig, beziehungsweise einteilig ausgestaltet sein.

Nach einer vorteilhaften Ausführungsform hat das erste Verbindungselement eine feste Länge (L). Demnach kann das erste Verbindungselement auch als Pleuel bezeichnet werden. Der Pleuel ist dabei vorteilhafterweise um eine Drehachse drehbar mit einer Innen-, AußenSchwinge verbunden. Weiterhin ist der Pleuel um eine Drehachse drehbar mit dem ersten Armelement der mechanischen Kopplung verbunden. Ein solches Pleuel kann vorteilhafterweise für eine Parallelführung zwischen Federungsoberteil und Federungsunterteil sorgen. Vorteilhafterweise ist bei einer konstanten Länge (L) des Pleuels der Neigungswinkel (ξ) abhängig von einer Sitzhöhe, beziehungsweise einer Höhe einer Vertikalfederung /-dämpfung.

Nach einer vorteilhaften Ausführungsform ist das erste Verbindungselement in seiner Länge modifizierbar. Vorteilhafterweise umfasst das erste Verbindungselement einen Aktor, mittels welchem die Länge (L) einstellbar ist. Vorteilhafterweise kann der Aktor ein elektrischer Aktor ein pneumatischer Aktor oder ein hydraulischer Aktor sein. Ein elektrischer Aktor könnte beispielsweise einen Elektromotor umfassen, welcher ein Spindelhubgetriebe umfasst. Vorteilhafterweise ist weiterhin eine Steuereinrichtung vorgesehen, welche den Aktor ansteuert. Vorteilhafterweise kann eine Ansteuerung des Aktors eine Anpassung der Länge (L) umfassen so dass bei einer Änderung der Sitzhöhe, beziehungsweise einer Änderung des Abstands zwischen dem Fahrzeugsitzoberteil und dem Fahrzeugsitzunterteil keine Änderung des Neigungswinkels (ξ) erfolgt. Es ist also vorteilhafterweise möglich, durch den Aktor oder durch eine in der Länge veränderbare Pleuelstange die Neigung der Sitzfläche über einen kompletten Höhenverstellweg konstant zu halten. Eine zusätzliche Einrichtung zur Einstellung der Sitzneigung ist demnach vorteilhafterweise nicht notwendig.

Nach einer weiteren vorteilhaften Ausführungsform ist eine Steuerungseinrichtung vorgesehen, welche den Aktor ansteuert. Bevorzugt ist zumindest ein Sensor vorgesehen, welcher dazu geeignet und dafür vorgesehen ist Nickschwingungen des Fahrzeugsitzoberteils zu detektieren und signaltechnisch mit der Steuerungseinrichtung verbunden ist. Ein solcher Sensor kann beispielsweise ein Positionssensor, ein Geschwindigkeitssensor oder ein Beschleunigungssensor sein. Vorteilhafterweise erfolgt eine aktive Federung von Nickschwingungen des Fahrzeugsitzoberteils durch die Ansteuerung des Aktors. Vorteilhafterweise steuert die Steuerungseinrichtung den Aktor anhand der Sensordaten an. Vorteilhafterweise kann der Neigungswinkel aktiv, je nach Fahrsituation und Schwingungsausschlag angepasst werden. Es ist demnach eine nahezu ideale Nickschwingungsisolierung ermöglicht.

Nach einer weiteren vorteilhaften Ausführungsform umfasst das erste Verbindungselement ein Federelement oder Feder-/Dämpferelement. Vorzugsweise ist durch das Federelement, beziehungsweise Feder-/Dämpferelement eine passive, eine semiaktive oder eine adaptive Federung/Dämpfung von Nickschwingungen des Fahrzeugsitzoberteils ermöglich. Ein Federelement ist vorteilhafterweise dazu vorgesehen, eine Rückstellung des Fahrzeugoberteils in eine Ausgangslage zu bewirken. Ein Dämpfer ist dazu vorgesehen, die Bewegungsenergie zu dissipieren. Ist bereits ein Dämpfungssystem, wie im Folgenden noch beschrieben, vorgesehen, welches dazu geeignet und dafür vorgesehen ist, Nickschwingungen des Fahrzeugsitzoberteils zu dämpfen, ist es von Vorteil lediglich ein Federelement vorzusehen. Ein kombiniertes Feder-/Dämpferelement ist von Vorteil, wenn kein weiteres Dämpfungssystem für Nickschwingungen vorgesehen ist. Denkbar ist natürlich auch, dass das Feder-/Dämpferelement und ein weiteres Dämpfungssystem vorgesehen sind. Bei einer semiaktiven Federung/Dämpfung ist wiederum eine Steuerungseinrichtung vorgesehen, welche das Feder-/Dämpferelement ansteuert. Die Eigenschaften des Feder-/Dämpferelement, beispielsweise die Dämpferhärte, können dabei vorteilhafterweise durch die Steuerungseinrichtung eingestellt werden. Der Insasse kann vorteilhafterweise mittels einer Bedieneinrichtung, welche mit der Steuerungseinrichtung signaltechnisch verbunden ist, bestimmte Federungs-/Dämpfungsparameter auswählen.

Nach einer weiteren bevorzugten Ausführungsform sind die zumindest eine Innenschwinge und die zumindest eine Außenschwinge um eine sich entlang einer Längsrichtung (X) erstreckende dritte Drehachse relativ zu dem Fahrzeugsitzunterteil schwenkbar angeordnet. Vorteilhafterweise sind bei einer Wankbewegung die zumindest eine Innenschwinge, die zumindest eine Außenschwinge und das Fahrzeugsitzoberteil um die dritte Drehachse relativ zu dem Fahrzeugsitzunterteil verschwenkt.

Nach einer weiteren bevorzugten Ausführungsform sind zumindest zwei Dämpfungselemente zwischen dem Fahrzeugsitzoberteil und ein Fahrzeugsitzunterteil angeordnet, welche sich jeweils bezüglich einer zur Höhenachse (Z) parallelen ersten Achse in einem Anstellwinkel (α) geneigt erstrecken. Bei einer derartigen geneigten Anordnung der zumindest zwei Dämpfungselemente ist der Anstellwinkel (α) vorteilhafterweise kleiner als 90°. Durch die zumindest zwei Dämpfungselemente wird demnach zumindest eine Vertikalbewegung des Fahrzeugsitzoberteils relativ zu dem Fahrzeugsitzunterteil gedämpft. Vorteilhafterweise wird bei einem Dämpfungsvorgang die Bewegungsenergie dissipiert.

Nach einer besonders bevorzugten Ausführungsform sind zwischen dem Fahrzeugsitzunterteil und dem Verbindungselement vier Dämpfungselemente angeordnet. Vorzugsweise bilden in einer Ruheposition des Sitzes jeweils zwei Dämpfungselemente die Schenkel eines fiktiven Trapezes aus. Bevorzugt werden die Grundseiten des fiktiven Trapezes durch das Fahrzeugsitzunterteil und durch das Verbindungselement gebildet. Unter einer Ruheposition des Fahrzeugsitzes ist diejenige Position zu verstehen, in welcher kein Schwingungseintrag erfolgt, beispielsweise ein nicht belegter Fahrzeugsitz in einem ruhenden Fahrzeug. Vorteilhafterweise ist das Fahrzeugsitzunterteil im wesentlichen rechteckförmig ausgebildet. Bevorzugt bilden die vier Dämpfungselemente entlang jeder Seite des Fahrzeugsitzunterteils ein fiktives Trapez aus. Vorteilhafterweise kann die Anordnung der vier Dämpfungselemente in der Ruheposition auch als ein fiktiver Pyramidenstumpf angesehen werden. Eine entsprechende fiktive recht-eckige untere Grundfläche wäre dann durch die vier unteren Anordnungspunkte der Dämpfungselemente gegeben. Eine vorteilhafte obere fiktive Grundfläche wäre durch obere Anordnungspunkte der Dämpfungselemente an dem zweiten Verbindungselement gegeben.

Durch die schwenkbewegliche Verbindung der zumindest einen Innenschwinge und der zumindest einen Außenschwinge kann vorteilhafterweise eine Nickbewegung des Fahrzeugsitzoberteils relativ zu dem Fahrzeugsitzunterteil in eine Drehbewegung des Verbindungselements um eine erste Drehachse relativ zu der zumindest einen Innenschwinge und um eine zweite Drehachse relativ zu der zumindest einen Außenschwinge übersetzt, beziehungsweise umgewandelt werden. Durch die zumindest zwei geneigt angeordneten Dämpfungselemente kann die Verdrehbewegung des zweiten Verbindungselements und somit, bedingt durch die vorhandene weitere mechanische Kopplung auch die entsprechende Nickbewegung des Fahrzeugsitzoberteils, relativ zu dem Fahrzeugsitzunterteil gedämpft werden. Unter einer Nickbewegung ist eine Verkippung des Fahrzeugsitzoberteils relativ zu dem Fahrzeugsitzunterteil um eine Nickachse, welche sich entlang der Breitenachse Y erstreckt, zu verstehen. Ebenso kann bei einer Nickbewegung das Fahrzeugsitzoberteil horizontal ausgerichtet bleiben und das Fahrzeugsitzunterteil relativ zu dem Fahrzeugsitzoberteil um die Breitenachse (Y) verkippen. Zur Dämpfung einer Nickbewegung wäre es zwar denkbar, die zumindest zwei Dämpfungselemente parallel zur Höhenachse (Z) zu stellen, jedoch würde sich dies nachteilig auf den Federungshub entlang der Höhenachse (Z) auswirken. Durch die vorteilhafterweise geneigt angeordneten Dämpfungselemente wird dieser Nachteil beseitigt.

Bei einer Wankbewegung verschwenkt das Fahrzeugsitzoberteil relativ zu dem Fahrzeugsitzunterteil oder umgekehrt um die dritte Drehachse. Durch eine solche Verschwenkung wird ein seitlicher Abstand zwischen Fahrzeugsitzoberteil und dem Fahrzeugsitzunterteil, beziehungsweise zwischen dem Verbindungselement und dem Fahrzeugsitzunterteil modifiziert. Durch die geneigte Anordnung der Dämpfungselemente zwischen dem Fahrzeugsitzunterteil und dem Verbindungselement kann auch eine solche Wankbewegung gedämpft werden. Zur Dämpfung einer Wankbewegung wäre es zwar denkbar, die zumindest zwei Dämpfungselemente parallel zur Höhenachse (Z) zu stellen, jedoch würde sich dies nachteilig auf den Federungshub entlang der Höhenachse (Z) auswirken. Durch die vorteilhafterweise geneigt angeordneten Dämpfungselemente wird dieser Nachteil beseitigt.

Schließlich können durch die Dämpfungselemente vertikale Schwingungen gedämpft werden, bei welchen das Fahrzeugsitzoberteil relativ zu dem Fahrzeugsitzunterteil verlagert wird.

Der Fahrzeugsitz kann vorzugsweise auch um 90° geschwenkt um die Z- Achse eingebaut werden. Die Nickbewegung, beziehungsweise die Nickachse würde somit zur Wankbewegung, beziehungsweise Wankachse und umgekehrt.

Nach einer weiteren vorteilhaften Ausführungsform sind die Dämpfungselemente um eine jeweilige Schwenkachse schwenkbar an dem Fahrzeugsitzunterteil angeordnet. Bevorzugt sind die Dämpfungselemente um eine jeweilige weitere Schwenkachse schwenkbar an dem Verbindungselement angeordnet. Die genannten vorteilhaften unteren Anordnungspunkte an dem Fahrzeugsitzunterteil können demnach vorzugsweise als Drehlagerungselemente ausgebildet sein, an welchen das jeweilige Dämpfungselement verschwenkbar angeordnet ist. Ferner können vorzugsweise die genannten oberen Anordnungspunkte an dem Verbindungselement als Drehlagerungselemente ausgebildet sein, an welchen das jeweilige Dämpfungselement verschwenkbar angeordnet ist. Vorteilhafterweise ist das jeweilige Dämpfungselement mittels einer sphärischen Lagerung mit dem Fahrzeugsitzunterteil und/oder dem Verbindungselement verbunden. Vorteilhafterweise weist das jeweilige Dämpferelement jeweils ein oberes und ein unteres Dämpferauge auf, welches vorzugsweise als eine Bohrung oder Ausnehmung ausgestaltet ist. In diesen Dämpferaugen kann vorteilhafterweise jeweils ein entsprechender Schwenkbolzen angeordnet werden, mittels welchem das jeweilige Dämpfungselement mit dem Verbindungselement, beziehungsweise dem Fahrzeugsitzunterteil verbunden ist. Weiterhin ist es von Vorteil, dass in einem oder mehreren der genannten Dämpferaugen eine Hülse oder Buchse aus einem elastischen Material vorgesehen ist, in welcher der jeweilige Schwenkbolzen angeordnet ist. Eine solche vorteilhafte (sphärische) Lagerung ermöglicht eine Rotationsfreiheit, durch eine elastische Verformung der Hülse oder Buchse, welche beispielsweise von Vorteil ist, wenn bei einer Rotation um die Längsachse (X) die beiden Schwenkachsen am oberen und unteren Ende des Dämpfungselements nicht mehr parallel sind.

Nach einer weiteren bevorzugten Ausführungsform ist bei einer Vertikalbewegung des Fahrzeugsitzoberteils relativ zu dem Fahrzeugsitzunterteil das Verbindungselement entlang der Höhenachse (Z) verlagert. Vorzugsweise ist der Anstellwinkel (α) der Dämpfungselemente abhängig von einer vertikalen Position des Fahrzeugsitzoberteils relativ zu dem Fahrzeugsitzunterteil. Durch die vorteilhafte schwenkbare Anordnung der Dämpfungselemente an dem Verbindungselement, beziehungsweise dem Fahrzeugsitzunterteil wird bei einer Verlagerung des Fahrzeugsitzoberteils, beziehungsweise des Verbindungselements in vertikaler Richtung also entlang der Höhenachse (Z) der Anstellwinkel (α) verändert. Der Anstellwinkel (α) erstreckt sich vorteilhafterweise zwischen einer Mittelachse des jeweiligen Dämpfungselements und der ersten Achse. Dabei ist es von Vorteil, dass der Anstellwinkel (α) für jedes Dämpfungselement unterschiedlich sein kann. Vorteilhafterweise ist der Anstellwinkel (α) aus einem Bereich zwischen 10° und 80° gewählt. Bevorzugt ist der Anstellwinkel (α) aus einem Bereich zwischen 15° und 75° gewählt. Weiter bevorzugt ist der Anstellwinkel (α) aus einem Bereich zwischen 20° und 70° gewählt.

Nach einer weiteren bevorzugten Ausführungsform ist bei einer Nickbewegung das Fahrzeugsitzoberteil um eine Nickachse relativ zu dem Fahrzeugsitzunterteil verkippt. Dabei kann vorteilhafterweise ein hinterer Abschnitt des Fahrzeugsitzoberteils relativ zu einem vorderen Abschnitt des Fahrzeugsitzoberteils entlang der Höhenachse (Z) nach oben oder nach unten verkippt werden. Vorteilhafterweise wird bei dieser Nickbewegung das Verbindungselement um die erste Drehachse und um die zweite Drehachse gedreht. Bevorzugt erfolgt eine Verlagerung der in den Loslagern gelagerten Schwingenden auf entlang der Höhenachse (Z) unterschiedliche horizontale Ebenen.

Nach einer weiteren bevorzugten Ausführungsform sind bei einer Wankbewegung die zumindest eine Innenschwinge, die zumindest eine Außenschwinge und das Fahrzeugsitzoberteil um die dritte Drehachse relativ zu dem Fahrzeugsitzunterteil verschwenkt.

Vorteilhafterweise dämpfen die Dämpfungselemente die Vertikalbewegung des Fahrzeugsitzoberteils relativ zu dem Fahrzeugsitzunterteil, die Nickbewegung des Fahrzeugsitzoberteils um die Nickachse relativ zu dem Fahrzeugsitzunterteil und die Wankbewegung des Fahrzeugsitzoberteils um die dritte Drehachse relativ zu dem Fahrzeugsitzunterteils. Vorteilhafterweise teilen sich die Dämpferkräfte abhängig vom Anstellwinkel α in die jeweiligen Komponenten (Wanken, Nicken oder Vertikal) auf.

Nach einer weiteren bevorzugten Ausführungsform umfassen die unteren Loslager der zumindest einen Innenschwinge und der zumindest einen Außenschwinge zumindest ein Aufnahmeelement. Vorteilhafterweise ist das zumindest eine Aufnahmeelement um die dritte Drehachse relativ zu dem Fahrzeugsitzunterteil schwenkbar. Vorzugsweise umfassen die unteren Loslagerungen Lagerrollen. Bevorzugt ist das zumindest eine Aufnahmeelement als ein Führungselement ausgebildet, in welchem die Lagerrollen entlang der Längsrichtung X geführt sind.

Nach einer weiteren bevorzugten Ausführungform umfasst die Scherengestellanordnung zwei Innenschwingen, welche ein Innenschwingenpaar bilden. Vorzugsweise umfasst die Scherengestellanordnung weiterhin zwei Außenschwingen, welche ein Außenschwingenpaar bilden. Die beiden Innenschwingen weisen vorteilhafterweise Schwingenenden auf, welche mittels eines Schwingenbolzens verbunden sind. Bevorzugt sind an dem Schwingenbolzen die Lagerrollen angeordnet. Die beiden Außenschwingen weisen vorteilhafterweise Schwingenenden auf, welche mittels eines Schwingenbolzens verbunden sind. Bevorzugt sind an dem Schwingenbolzen die Lagerrollen angeordnet.

Nach einer weiteren bevorzugten Ausführungsform ist zusätzlich zu den Dämpferelementen zumindest ein Federelement vorgesehen, mittels welchem eine Verlagerung des Fahrzeugsitzoberteils relativ zu dem Fahrzugsitzunterteil aufgrund der Schwingungseinwirkung durch eine vertikale Bewegung eine Nickbewegung oder eine Wankbewegung rückstellbar ist.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig.1: Prinzipskizze des Fahrzeugsitzes nach einer Ausführungsform;
- Fig.2a, 2b: Prinzipskizzen des Fahrzeugsitzes nach einer Ausführungsform;
- Fig.3: eine Ansicht des Innenschwingenpaars und des Außenschwingenpaars;
- Fig.4a, 4b: Ansichten des Verbindungselements;
- Fig.5: eine Ansicht des Innenschwingenpaars und des Außenschwingenpaars nach einer weiteren Ausführungsform;
- Fig.6: Vorderansicht des Fahrzeugsitzes nach einer Ausführungsform;
- Fig.7: Schnittansicht entlang der Achse A-A in Figur 6;
- Fig.8: Schnittansicht entlang der Achse B-B in Figur 6;
- Fig.9: Schnittansicht entlang der Achse A-A nach einer weiteren Ausführungsform;
- Fig.10: Schnittansicht entlang der Achse A-A nach einer weiteren Ausführungsform;
- Fig. 11: Seitenansicht des Fahrzeugsitzes nach einer Ausführungsform nach einer Nickbewegung;
- Fig.12: Seitenansicht des Fahrzeugsitzes nach einer Ausführungsform nach einer Nickbewegung;
- Fig.13: Vorderansicht des Fahrzeugsitzes nach einer Ausführungsform nach einer Nickbewegung;
- Fig.14: Vorderansicht des Fahrzeugsitzes nach einer Ausführungsform nach einer Wankbewegung;
- Fig.15a: Vorderansicht des Fahrzeugsitzes nach einer Ausführungsform in einer mittleren Position entlang der Höhenachse Z;
- Fig.15b: Vorderansicht des Fahrzeugsitzes nach einer Ausführungsform in einer oberen und einer unteren Position entlang der Höhenachse Z
- Fig.16a: Seitenansicht des Fahrzeugsitzes nach einer Ausführungsform in einer mittleren Position entlang der Höhenachse Z;
- Fig. 16b: Seitenansicht des Fahrzeugsitzes nach einer Ausführungsform in einer oberen und einer unteren Position entlang der Höhenachse Z;
- Fig. 17: Draufsicht auf den Fahrzeugsitz nach einer Ausführungsform,
- Fig. 18: Isometrische Ansicht des Fahrzeugsitzes nach einer Ausführungsform;
- Fig. 19: Isometrische Ansicht des Fahrzeugsitzes nach einer Ausführungsform nach einer Nickbewegung.

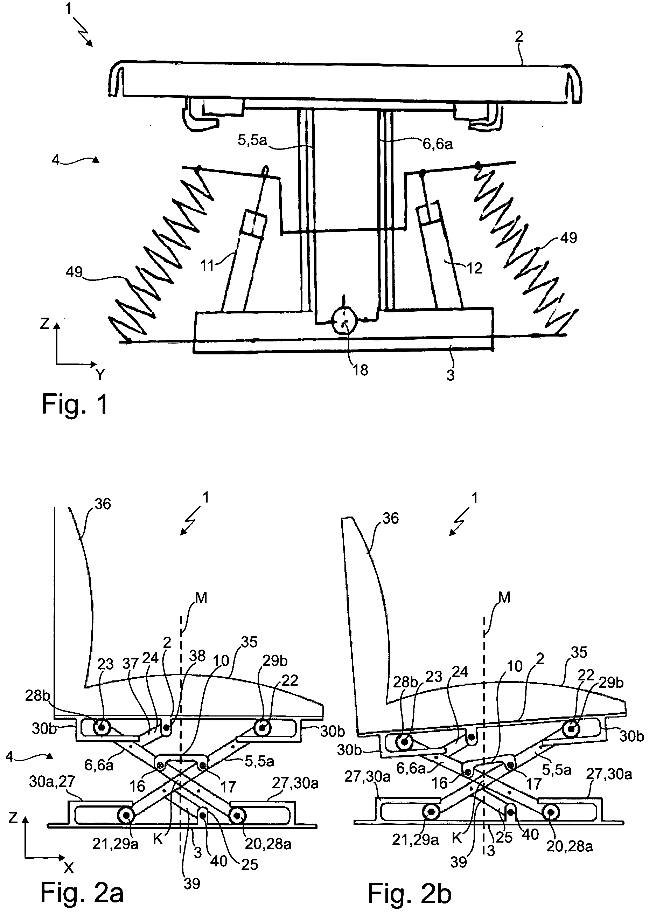

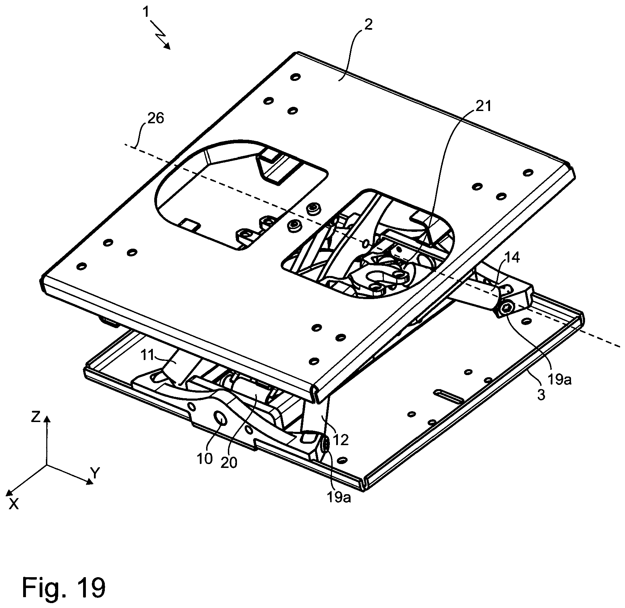

In den Figuren 1 bis 19 wird ein Fahrzeugsitz 1 dargestellt, umfassend ein Fahrzeugsitzoberteil 2 und ein Fahrzeugsitzunterteil 3, welche entlang einer Höhenachse Z voneinander beabstandet sind und mittels einer Scherengestellanordnung 4 miteinander verbunden sind, wobei die Scherengestellanordnung 4 zumindest eine Innenschwinge 5, 5a und zumindest eine Außenschwinge 6, 6a umfasst, wobei die zumindest eine Innenschwinge 5, 5a und die zumindest eine Außenschwinge 6, 6a mechanisch gekoppelt sind, wodurch ein Neigungswinkel ξ des Fahrzeugsitzoberteils 2 relativ zum Fahrzeugsitzunterteil 3 vorgebbar ist, wobei die mechanische Kopplung 7, ein Armelement 8 und ein damit schwenkbar verbundenes erstes Verbindungselement 9 umfasst, wobei durch eine Länge L des ersten Verbindungselements 9 der Neigungswinkel ξ vorgebbar ist.

Demnach erstreckt sich der Fahrzeugsitz 1 entlang der Höhenachse Z, der Breitenachse Y und der Längsachse X. Der Fahrzeugsitz 1 umfasst weitere Elemente wie beispielsweise ein Sitzpolster 35 und eine Rückenlehne 36, welches auf dem Fahrzeugsitzoberteil 2 angeordnet werden können. Dies ist in den Figuren 2a und 2b angedeutet. In den Figuren 2a und 2b wurde lediglich aus Übersichtlichkeitsgründen die mechanische Kopplung 7 nicht gezeigt. In den übrigen Figuren wurde aufgrund der Übersichtlichkeit auf die Darstellung dieser Elemente verzichtet. Ferner sind auch noch weitere Ausführungsformen denkbar, welche weitere Elemente, wie beispielsweise Armlehnen umfassen. Das Fahrzeugsitzunterteil 3 kann an einer Fahrzeugkarosserie angeordnet werden.

Das Armelement 8 erstreckt sich entlang der Längsachse X vom Zentrum des Fahrzeugsitzes 1 weg. Ferner erstreckt es sich entlang der Höhenachse Z geneigt nach unten also zum Fahrzeugsitzunterteil 3 hin. Das erste Verbindungselement 9 erstreckt sich entlang der Höhenachse Z nach oben, also zum Fahrzeugsitzoberteil 2 hin. Demnach sind Armelement 8 und das Verbindungelement 9 im Wesentlichen dreiecksförmig angeordnet. Vorzugsweise weist, bei einer horizontalen Ausrichtung des Fahrzeugsitzoberteils 2 das Armelement 8 eine größere Länge auf, als das Verbindungselement 9 (Länge L).

Die zumindest eine Innenschwinge 5, 5a und die zumindest eine Außenschwinge 6, 6a sind durch ein zweites Verbindungselement 10 verbunden, welches um jeweils eine sich entlang einer Breitenrichtung Y erstreckende erste Drehachse 16, beziehungsweise zweite Drehachse 17 relativ zu der zumindest einen Innenschwinge 5, 5a und relativ zu der zumindest einen Außenschwinge 6, 6a drehbar ist. Die zumindest eine Innenschwinge 5, 5a und die zumindest eine Außenschwinge 6, 6a sind um eine sich entlang einer Längsrichtung X erstreckende dritte Drehachse 18 relativ zu dem Fahrzeugsitzunterteil 3 schwenkbar angeordnet.

Die zumindest eine Innenschwinge 5, 5a und die zumindest eine Außenschwinge 6, 6a kreuzen sich in einem Kreuzungsbereich K. Zumindest in einer Ruheposition sind dabei die erste Drehachse 16 und die zweite Drehachse 17 entlang der Höhenachse Z über dem Kreuzungsbereich K oder entlang der Höhenachse Z unter dem Kreuzungsbereich K angeordnet. Ferner weisen die erste Drehachse 16 und die zweite Drehachse 17 zumindest in einer Ruheposition den gleichen Abstand entlang der Höhenachse Z zu dem Fahrzeugsitzunterteil 3 auf. Demnach ist das zweite Verbindungselement 10 nicht verdreht und im Wesentlichen horizontal, beziehungsweise parallel zu der Längsachse X ausgerichtet. Es kann weiterhin eine Mittelachse M definiert werden, welche durch den Kreuzungspunkt K verläuft. Dies ist in den Figuren 2a und 2b gut ersichtlich. Die erste Drehachse 16 und die zweite Drehachse 17 weisen dabei zumindest in einer Ruheposition einen gleichen horizontalen Abstand zu der Mittelachse M auf. Das zweite Verbindungselement 10 ist dabei mittels weiterer Verbindungselemente 42 an der zumindest einen Innenschwinge 5, beziehungsweise der zumindest einen Außenschwinge 6 angeordnet. Die weiteren Verbindungselemente 42 sind dazu geeignet, eine drehbare Verbindung zwischen dem zweiten Verbindungselement 10 und der zumindest einen Innenschwinge 5, beziehungsweise der zumindest einen Außenschwinge 6 herzustellen. Die weiteren Verbindungselemente 42 erstrecken sich entlang der ersten Drehachse 16, beziehungsweise der zweiten Drehachse 17 und können dabei als Bolzen oder Schrauben ausgestaltet sein. Hierzu sind entsprechende Mittellagerbohrungen 41 in der zumindest einen Innenschwinge 5, beziehungsweise der zumindest einen Außenschwinge 6 vorgesehen, in welchen diese weiteren Verbindungselemente 42 aufgenommen sind.

Die zumindest eine Innenschwinge 5, 5a und die zumindest eine Außenschwinge 6, 6a sind jeweils mittels zumindest einer unteren Loslagerung 20, 21 an dem Fahrzeugsitzunterteil 3 angeordnet. Weiterhin sind die zumindest eine Innenschwinge 5, 5a und die zumindest eine Außenschwinge 6, 6a jeweils mittels zumindest einer oberen Loslagerung 22, 23 an dem Fahrzeugsitzoberteil 2 angeordnet.

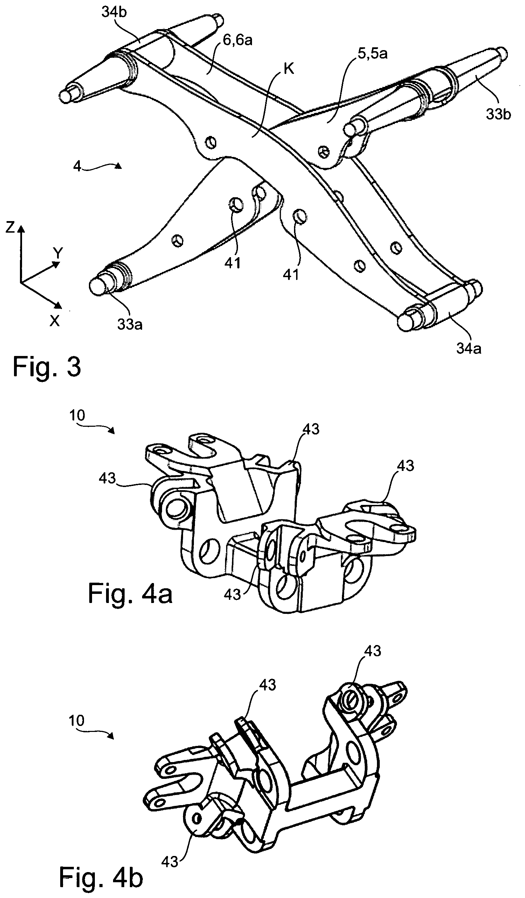

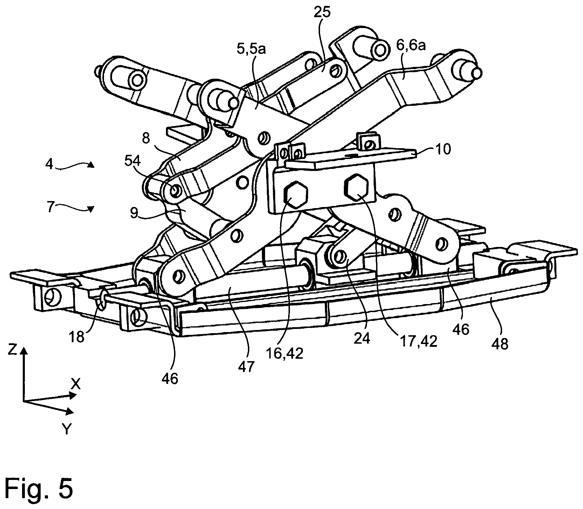

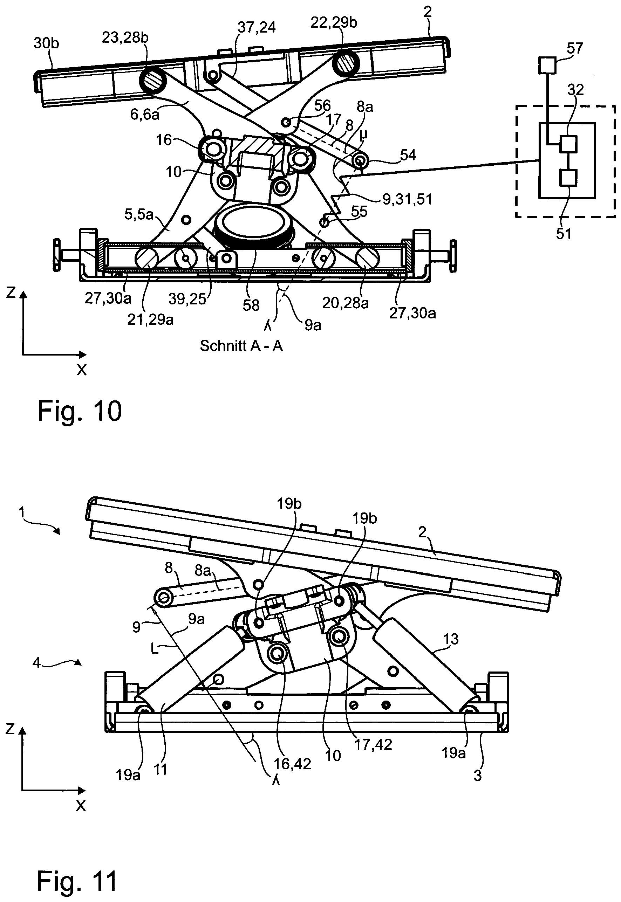

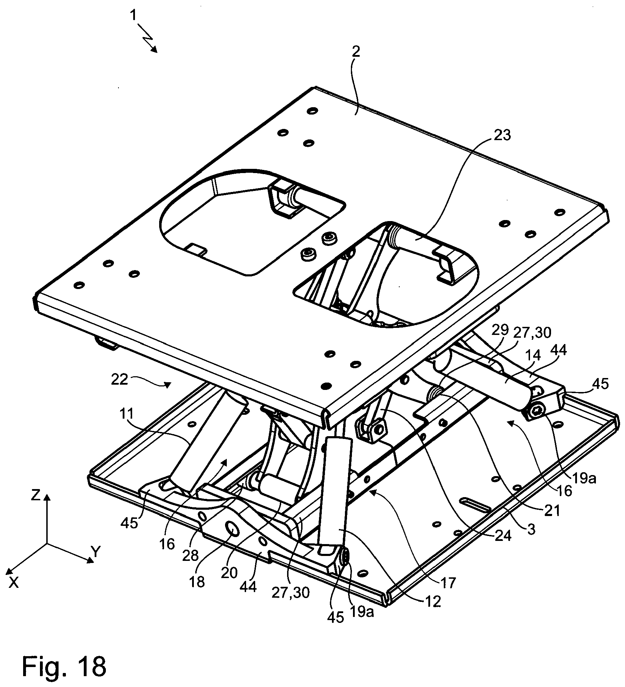

Die Scherengestellanordnung 4 umfasst ein Innenschwingenpaar 5a und ein Außenschwingenpaar 6a, wie beispielsweise in den Figuren 3 und 5 dargestellt. Gemäß der Ausführungform nach Figur 3 weist sowohl das Innenschwingenpaar 5a als auch das Außenschwingenpaar 6a an den jeweiligen Schwingenenden einen durchgehenden Schwingenbolzen 33, 34 auf. An diesen Schwingenbolzen 33, 34 sind die jeweiligen Lagerrollen 28a, 28b, 29a, 29b angeordnet. Dies ist beispielsweise in Figur 18 gut ersichtlich. Das Innenschwingenpaar 5a weist demnach einen oberen Schwingenbolzen 33b auf, an welchem jeweils zwei Lagerrollen 29b angeordnet sind, welche der oberen Loslagerung 23 des Innenschwingenpaars 5a zugeordnet sind. Ferner weist das Innenschwingenpaar 5a einen unteren Schwingenbolzen 33a auf, an welchem jeweils zwei Lagerrollen 29a angeordnet sind, welche der unteren Loslagerung 21 des Innenschwingenpaars 5a zugeordnet sind. Ebenso weist das Außenschwingenpaar 6a einen oberen Schwingenbolzen 34b auf, an welchem jeweils zwei Lagerrollen 28b angeordnet sind, welche der oberen Loslagerung 22 des Außenschwingenpaars 6a zugeordnet sind. Ferner weist das Außenschwingenpaar 6a einen unteren Schwingenbolzen 34a auf, an welchem jeweils zwei Lagerrollen 28a angeordnet sind, welche der unteren Loslagerung 20 des Außenschwingenpaars 6a zugeordnet sind. Ferner kann das weitere Verbindungselement 42, mittels welchem eine drehbare Verbindung zwischen dem zweiten Verbindungselement 10 und der zumindest einen Innenschwinge 5, beziehungsweise der zumindest einen Außenschwinge 6 hergestellt wird, als ein durchgehender Bolzen, der sich entlang der jeweiligen Drehachse 16, 17 erstreckt, ausgestaltet sein. Demnach wäre das zweite Verbindungselement 10 mittels zweier Bolzen an der zumindest einen Innenschwinge 5, beziehungsweise der zumindest einen Außenschwinge 6 angeordnet. Ferner wäre es denkbar, dass pro Schwingenpaar 5a, 6a jeweils zwei nicht durchgehende Bolzen, beziehungsweise Schrauben als weitere Verbindungselemente 42 vorgesehen sind. Demnach wäre das zweite Verbindungselement 10 mittels insgesamt vier Bolzen an der zumindest einen Innenschwinge 5, 5a, beziehungsweise der zumindest einen Außenschwinge 6, 6a angeordnet. Gemäß der Ausführungsform nach Figur 5 ist das weitere Verbindungselement 42 als ein Bolzen, beziehungsweise eine Schraube ausgeführt. Gemäß der Ausführungsform nach Figur 11 ist das weitere Verbindungselement 42 als ein durchgehender Bolzen oder Welle ausgestaltet.

Gemäß der Ausführungsform nach Figur 5 weisen die Schwingenpaare 5a, 6a an den Schwingenenden keinen durchgehenden Schwingenbolzen auf. Vielmehr ist an jedem Schwingenende eine Lagerungseinrichtung für die jeweiligen Lagerrollen 28a, 28b, 29a, 29b vorgesehen, welche anlog zu der in Figur 3 beschriebenen Ausführungsform den oberen Loslagerungen 22, 23, beziehungsweise den unteren Loslagerungen 20, 21 zugeordnet sind. Die oberen Lagerrollen 28b, 29b sind jeweils in oberen Führungselementen 30b geführt. Die unteren Lagerrollen 28a, 29a sind jeweils in unteren Führungselementen 30a geführt. In der Figur 2a ist weiterhin ersichtlich, dass in einer Ruheposition die unteren Lagerrollen 28a, 29a einen geringeren Abstand zu der Mittelachse M aufweisen als die oberen Lagerrollen 28b, 29b.

Ferner sind die zumindest eine Innenschwinge 5, 5a oder die zumindest eine Außenschwinge 6, 6a mittels einer Festlagerung 25 mit dem Fahrzeugsitzunterteil 3 verbunden, wobei die zumindest eine Innenschwinge 5, 5a oder die zumindest eine Außenschwinge 6, 6a mittels einer weiteren Festlagerung 24 mit dem Fahrzeugsitzoberteil 2 verbunden ist.

Durch das Vorsehen der Festlagerungen 24, 25 wird eine unbestimmte Führung, verursacht durch das Vorsehen der vier Loslagerungen 20, 21, 22, 23, vermieden.

Die obere Festlagerung 24 umfasst dabei einen Hebelarm 37, welcher an einem entlang der Längsrichtung X hinteren Bereich und entlang der Höhenrichtung Z oberen Bereich der zumindest einen Außenschwinge 6, 6a drehbar angeordnet ist. Demnach ist dieser Hebelarm 37 an der zumindest einen Außenschwinge 6 zwischen dem oberen Schwingenbolzen 34b und dem Kreuzungspunkt K, beziehungsweise der um die erste Drehachse 8 drehbaren Verbindung des Verbindungselements 7 mit der zumindest einen Außenschwinge 6, 6a drehbar angeordnet. Ferner ist der Hebelarm 37 drehbar an dem Fahrzeugsitzoberteil 2 angeordnet. Der Hebelarm 37 ist dabei um eine vierte Drehachse 38 relativ zu dem Fahrzeugsitzoberteil 2 verschwenkbar. Vorteilhafterweise sind die vierte Drehachse 38 und die erste Drehachse 16 entlang der Höhenachse Z voneinander beabstandet. Ferner weisen die vierte Drehachse 38 und die erste Drehachse 16 zumindest in einer Ruheposition den gleichen Abstand zu der Mittelachse M auf.

Die untere Festlagerung 25 umfasst ebenso einen Hebelarm 39, welcher drehbar an einem entlang der Längsrichtung X hinteren Bereich und entlang der Höhenrichtung Z unteren Bereich der zumindest einen Innenschwinge 5, 5a drehbar angeordnet ist. Demnach ist dieser Hebelarm 39 an der zumindest einen Innenschwinge 5 zwischen dem unteren Schwingenbolzen 33a und dem Kreuzungspunkt K drehbar angeordnet. Ferner ist der Hebelarm 39 drehbar an dem Fahrzeugsitzunterteil 3 angeordnet. Der Hebelarm 39 ist dabei um eine fünfte Drehachse 40 relativ zu dem Fahrzeugsitzunterteil 3 verschwenkbar.

Vorteilhafterweise sind die fünfte Drehachse 40 und die zweite Drehachse 17 entlang der Höhenachse Z voneinander beabstandet. Ferner weisen die fünfte Drehachse 40 und die zweite Drehachse 17 zumindest in einer Ruheposition den gleichen Abstand zu der Mittelachse M auf.

Durch eine derartige Ausgestaltung der Loslager 20, 21, 22, 23 und der Festlager 23, 24 wird sichergestellt, dass durch eine Hubbewegung der Kreuzungspunkt, beziehungsweise das zweite Verbindungselement 10 immer zentrisch bleiben.

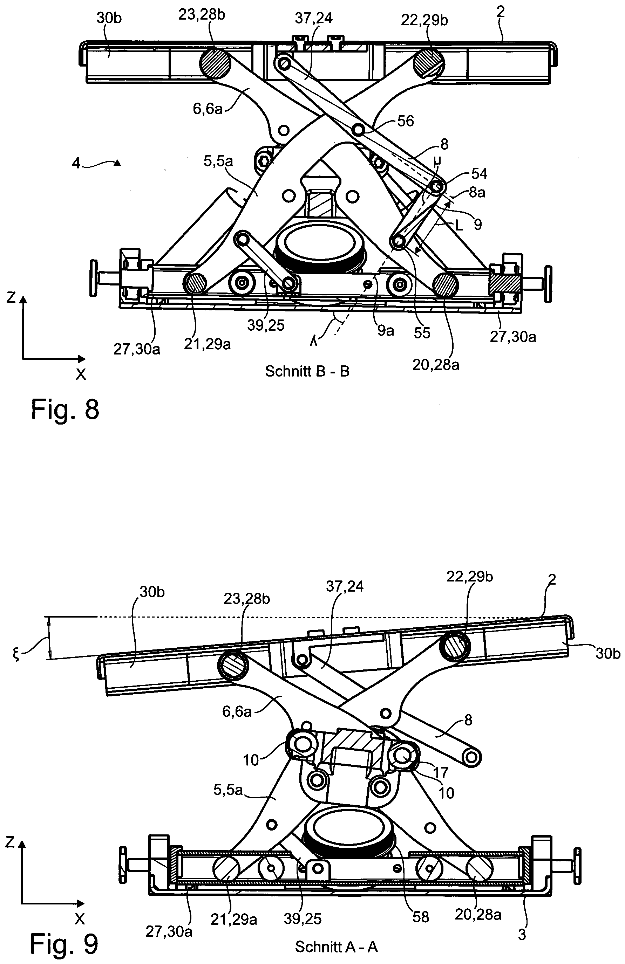

Das Armelement 8 ist an der zumindest einen Innenschwinge 5, 5a angeordnet und das erste Verbindungselement 9 an der zumindest einen Außenschwinge 6, 6a. Selbstverständlich kann das Armelement 8 auch an der zumindest einen Außenschwinge 6, 6a angeordnet sein und das erste Verbindungselement 9 an der zumindest einen Innenschwinge 5, 5a. In der Figur 5 ist eine Ausführungsform gezeigt, in welcher das Armelement 8 mit beiden Innenschwingen 5 des Innenschwingenpaars 5a verbunden ist. Das erste Verbindungselement 9 ist mit beiden Außenschwingen 6 des Außenschwingenpaars 6a verbunden. Das erste Verbindungselement 9 ist dabei um eine sechste Drehachse 54 drehbar mit dem Armelement 8 verbunden und um eine siebte Drehachse 55 mit der zumindest einen Innenschwinge 5, 5a oder der zumindest einen Außenschwinge 6, 6a. Das Armelement 8 ist um eine achte Drehachse 56 an der zumindest einen Innenschwinge 5, 5a oder der zumindest einen Außenschwinge 6, 6a angeordnet. Der Hebelarm 37 des oberen Festlagers 24 kann dabei eine starre Verbindung mit dem Armelement 8 aufweisen. Der Hebelarm 37 des oberen Festlagers 24 kann auch mit dem Armelement 8 einstückig, beziehungsweise einteilig ausgebildet sein. Dies ist beispielsweise in Figur 8 dargestellt.

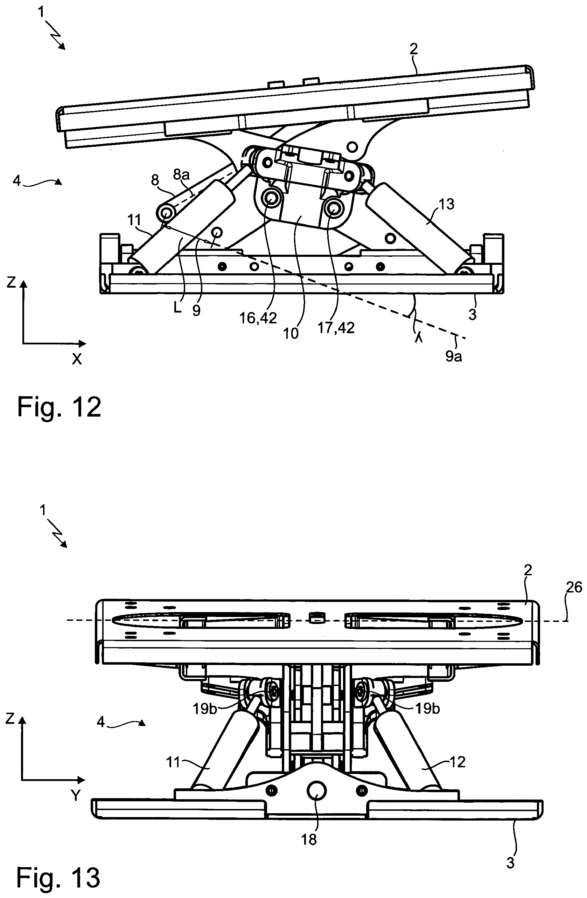

Das Armelement 8 erstreckt sich entlang der Längsachse X und geneigt entlang der Höhenachse Z nach unten. Bei einer horizontalen Ausrichtung des Fahrzeugsitzoberteils 2 kann das Armelement 8 bevorzugt im Wesentlichen parallel zu einer Schwinge 5, 5a, 6, 6a verlaufen. Das Armelement 8 und das Verbindungselement 9 sind im Wesentlichen dreiecksförmig angeordnet ein Winkel µ zwischen dem Armelement 8 und dem Verbindungselement 9, beziehungsweise zwischen deren Mittelachsen 8a, 9a abhängig von dem Neigungswinkel ξ. Bevorzugt liegt Winkel µ zwischen 10° und 90°. Wie aus den Figuren 11 und 12 ersichtlich, ändert sich bei einer Neigungsveränderung ein Anstellwinkel λ, welcher sich zwischen dem Verbindungselement 9, beziehungsweise einer Mittelachse 9a des Verbindungselements 9 und dem Fahrzeugsitzunterteil 3 erstreckt. Bevorzug liegt der Anstellwinkel λ in einem Bereich zwischen 10° und 90°.

Nach einer Ausführungsform gemäß den Figuren 5 und 8 hat das erste Verbindungselement 9 eine feste Länge (L). Demnach kann das erste Verbindungselement 9 auch als Pleuel bezeichnet werden. Das Pleuel 9 ist dabei um die siebte Drehachse 55 drehbar mit einer Innen-, Außen-) Schwinge 5, 5a, 6, 6a verbunden. Weiterhin ist das Pleuel 9 um die sechste Drehachse 54 drehbar mit dem ersten Armelement 8 der mechanischen Kopplung 7 verbunden. Ein solches Pleuel 9 sorgt für eine Parallelführung zwischen Federungsoberteil 2 und Federungsunterteil 3. Bei einer konstanten Länge (L) des Pleuels 9 der Neigungswinkel (ξ) abhängig von einer Sitzhöhe, beziehungsweise einer Höhe einer Vertikalfederung/-dämpfung.

Das erste Verbindungselement 9 kann jedoch auch derart ausgestaltet sein, dass dessen Länge L modifizierbar ist. Dies ist in Figur 10 schematisch dargestellt. Das erste Verbindungselement 9 kann einen Aktor 31 umfassen, mittels welchem die Länge L einstellbar ist. Ein solcher Aktor 31 kann elektrisch, pneumatisch oder hydraulisch sein. Weiterhin kann eine Steuerungseinrichtung 32 vorgesehen sein, welche den Aktor 31 ansteuert. Die Steuerungseinrichtung 32 kann signaltechnisch mit zumindest einem Sensor 50 verbunden sein, welcher dazu geeignet und dafür vorgesehen ist, Nickschwingungen des Fahrzeugsitzoberteils 2 und/oder des Fahrzeugsitzunterteils 3 und/oder des Karosseriebodens zu detektieren. Durch eine derartige Ausgestaltung kann eine aktive Federung von Nickschwingungen des Fahrzeugsitzoberteils 2 und/oder des Fahrzeugsitzunterteils 3 und/oder des Karosseriebodens durch die Ansteuerung des Aktors 31 erfolgen.

Bei einer Änderung der Sitzhöhe wird der vertikale Abstand zwischen dem Fahrzeugsitzoberteil 2 und dem Fahrzeugsitzunterteil 3 verändert. Auch bei vertikalen Schwingungen erfolgt eine Änderung der Sitzhöhe, welche jedoch durch das Dämpfungssystem gedämpft wird. Es kann auch ein entsprechendes Federungssystem vorgesehen sein, welches eine entsprechende Rückstellung bewirkt. Bei einer festen Länge L des ersten Verbindungselements 9 erfolgt eine Änderung des Neigungswinkels ξ bei einer Änderung der Sitzhöhe. Bei den gedämpften, vorzugsweise gefederten vertikalen Schwingungen kann eine solche Winkeländerung in der Regel vernachlässigt werden. Bei einer Sitzhöheneinstellung durch den Nutzer ist es von Vorteil, wenn die Steuerungseinrichtung die Länge L des ersten Verbindungselements 9 entsprechend nachreguliert, damit der Neigungswinkel ξ für die neu eingestellte Sitzhöhe erhalten bleibt.

Nach einer weiteren vorteilhaften Ausführungsform umfasst das erste Verbindungselement 9 ein Federelement oder Feder-/Dämpferelement 51. Vorzugsweise wird durch das Federelement, beziehungsweise Feder-/Dämpferelement 51 eine passive, eine semiaktive oder eine adaptive Federung/Dämpfung von Nickschwingungen des Fahrzeugsitzoberteils 2 ermöglicht. Das Feder-/Dämpferelement 51 kann passiv, semiaktiv oder adaptiv ausgestaltet sein, wobei bei einer semiaktiven Ausgestaltung eine Steuerungseinrichtung 31 vorgesehen ist, welche das Feder-/Dämpferelement 51 entsprechend ansteuert.

Sowohl bei der aktiven als auch bei der semiaktiven Ansteuerung kann eine Bedieneinrichtung 57 vorgesehen sein, welche mit der Steuerungseinrichtung 31 signaltechnisch verbunden ist und mittels welcher ein Insasse entsprechende Parameter vergeben kann.

Die zumindest eine Innenschwinge 5, 5a und die zumindest eine Außenschwinge 6, 6a sind um eine sich entlang einer Längsrichtung X erstreckende dritte Drehachse 18 relativ zu dem Fahrzeugsitzunterteil 3 schwenkbar angeordnet. Bei einer Wankbewegung sind die zumindest eine Innenschwinge 5, 5a, die zumindest eine Außenschwinge 6, 6a und das Fahrzeugsitzoberteil 2 um die dritte Drehachse 18 relativ zu dem Fahrzeugsitzunterteil 3 verschwenkt.

Weiterhin sind zumindest zwei Dämpfungselemente 11, 12, 13, 14 zwischen dem Fahrzeugsitzoberteil 2 und dem Fahrzeugsitzunterteil 3 angeordnet, welche sich jeweils bezüglich einer zur Höhenachse Z parallelen ersten Achse 15 in einem Anstellwinkel α geneigt erstrecken.

Vorteilhafterweise sind zwischen dem Fahrzeugsitzunterteil 3 und dem zweiten Verbindungselement 10 vier Dämpfungselemente 11, 12, 13, 14 angeordnet. Dabei bilden in einer Ruheposition des Fahrzeugsitzes 1 jeweils zwei Dämpfungselemente 11, 12, 13, 14 die Schenkel eines fiktiven Trapezes 52 aus. Die Anordnung der vier Dämpfungselemente 11, 12, 13, 14 kann auch dahingehend angesehen werden, dass diese zusammen mit einem Abschnitt des Fahrzeugsitzunterteils 3 und dem zweiten Verbindungselement 10 einen fiktiven Pyramidenstumpf 53 bilden.

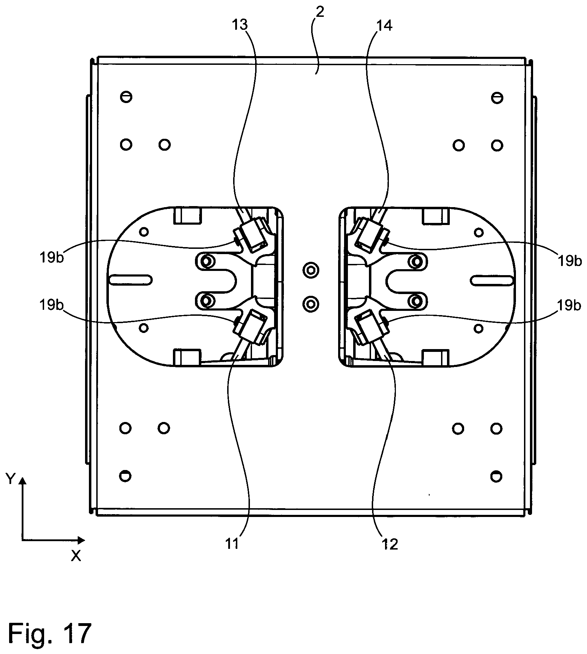

Die Dämpfungselemente 11, 12, 13, 14 sind um eine jeweilige Schwenkachse 19a schwenkbar an dem Fahrzeugsitzunterteil 3 angeordnet, welche beispielsweise in Figur 17 zu erkennen sind. Ferner sind die Dämpfungselemente 11, 12, 13, 14 um eine jeweilige weitere Schwenkachse 19b schwenkbar an dem zweiten Verbindungselement 10 angeordnet. Das zweite Verbindungselement 10 weist hierzu entsprechende Aufnahmen 43 auf, an welchen die Dämpfungselemente 11, 12, 13, 14 schwenkbar anordenbar sind. Dies ist in den Figuren 4a und 4b gut ersichtlich. Ebenso sind an dem Fahrzeugsitzunterteil 3 entsprechende Aufnahmen 45 vorgesehen, an welchen die Dämpfungselemente 11, 12, 13, 14 schwenkbar anordenbar sind.

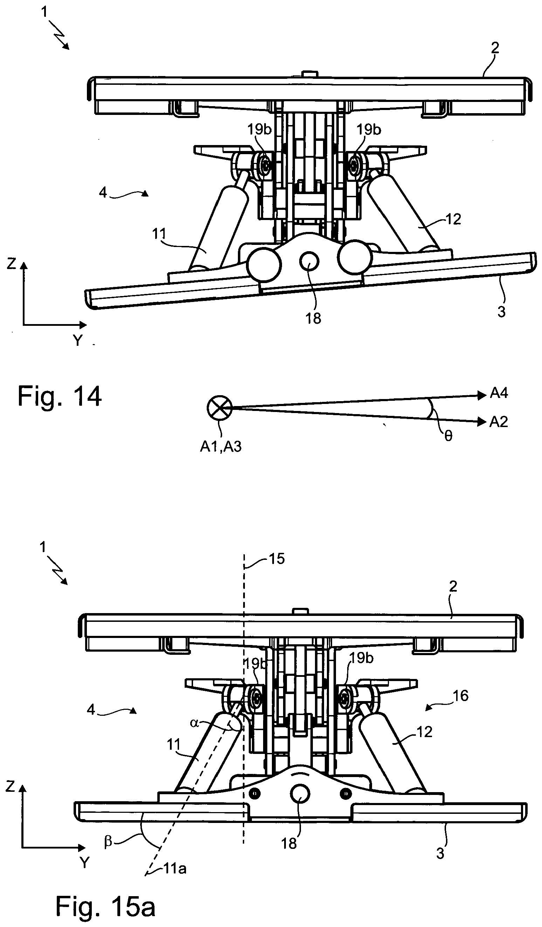

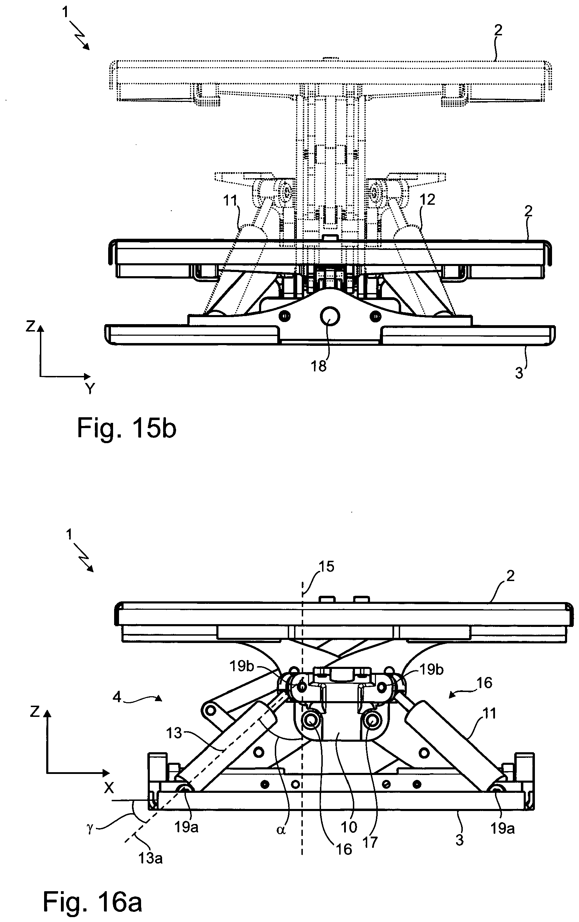

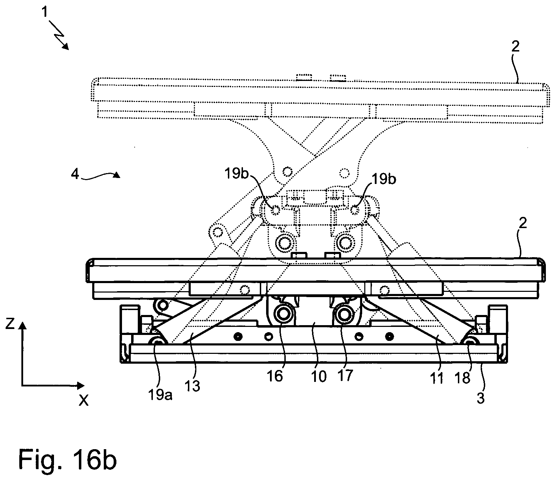

Bei einer Vertikalbewegung des Fahrzeugsitzoberteils 2 relativ zu dem Fahrzeugsitzunterteil 3 wird das zweite Verbindungselement 10 entlang der Höhenachse Z verlagert, dementsprechend werden alle vier Dämpfungselemente 11, 12, 13, 14 in ihrer Länge modifiziert. Ferner wird bei einer derartigen vertikalen Bewegung des Fahrzeugsitzoberteils 2 durch die schwenkbare Anordnung der Dämpfungselemente 11, 12, 13, 14 der Anstellwinkel oder Dämpfungselemente 11, 12, 13, 14 entsprechend modifiziert. Dabei erstreckt sich der Anstellwinkel α zwischen einer Mittelachse 11a, 12a, 13a, 14a des jeweiligen Dämpfungselements 11, 12, 13, 14 und der ersten Achse 15. Dementsprechend wird die vertikalen Bewegung des Fahrzeugsitzoberteils 2 durch die Dämpfungselemente 11, 12, 13, 14 gedämpft. Dies ist in den Figuren 15, 16 gut ersichtlich. In den Figuren 15a und 16a ist dabei ein Zustand dargestellt in welcher sich der Fahrzeugsitz 1 in einer mittleren vertikalen Position befindet. Ferner ist in der Figuren 15b und 16b ein Fahrzeugsitz 1 dargestellt, welcher sich in eine oberen (gestrichelte Darstellung), beziehungsweise einer unteren vertikalen Position befindet.

In den Figuren 2b, 9 bis 13 und 19 ist ein Fahrzeugsitz 1 dargestellt, bei welchem das Fahrzeugsitzoberteil 2 eine Nickbewegung relativ zu dem Fahrzeugsitzunterteil 3 erfahren hat. Bei einer solchen Nickbewegung ist das Fahrzeugsitzoberteil 2 um eine Nickachse 26 relativ zu dem Fahrzeugsitzunterteil 3 verkippt. Die Verkippung kann in dem Neigungswinkel ξ ausgedrückt werden. Dabei erfolgt eine Verlagerung der in den oberen Loslagern 22, 23 gelagerten Schwingenenden auf entlang der Höhenachse Z unterschiedliche horizontale Ebenen. Darüber hinaus erfolgt eine Drehung des zweiten Verbindungselements 10 um die erste Drehachse 16 und die zweite Drehachse 17. Durch diese Drehung des zweiten Verbindungselements 10 werden, entsprechend der Drehrichtung die Dämpfungselement 11, 12, 13, 14 verlängert oder verkürzt. Die Nickbewegung wird somit gedämpft. Wie aus den Figuren ersichtlich ist es von Vorteil, dass das Verbindungselement 10 gegensätzlich zu dem Fahrzeug-sitzoberteil 2 verkippt, beziehungsweise gedreht wird. Analog hierzu kann eine Nickbewegung auch dahingehend erfolgen, dass das Fahrzeugsitzoberteil 2 seine horizontale Position behält und das Fahrzeugsitzunterteil 3 entsprechend verkippt. Dementsprechend erfolgt die Verlagerung der Achsen der unteren Loslager 20, 21 in entsprechend andere horizontale Ebenen. Analog erfolgt auch hier eine Drehung des zweiten Verbindungselements 10 um die erste Drehachse 16 und die zweite Drehachse 17. Durch diese Drehung des zweiten Verbindungselements 10 werden, entsprechend der Drehrichtung die Dämpfungselemente 11, 12, 13, 14 verlängert oder verkürzt. Die Nickbewegung wird somit gedämpft.

Neben der Dämpfung der vertikalen Bewegung des Fahrzeugsitzoberteils 2 und der Nickbewegung kann auch eine Wankbewegung mittels der Dämpfungselemente 11, 12, 13, 14 gedämpft werden. Hierzu sind die zumindest eine Innenschwinge 5, 5a, die zumindest eine Außenschwinge 6, 6a und das Fahrzeugsitzoberteil 2 um die sich entlang einer Längsrichtung X erstreckende dritte Drehachse 18 relativ zu dem Fahrzeugsitzunterteil 3 verschwenkbar. In Figur 14 ist eine solche Wankbewegung dargestellt. Durch die Verschwenkung um die dritte Drehachse 18 ändert sich die Ausrichtung das Fahrzeugsitzoberteils 2 relativ zu dem Fahrzeugsitzunterteil 3. Das Fahrzeugsitzoberteil 2 und Fahrzeugsitzunterteil 3 erstrecken sich in einer Ausgangsposition jeweils in einer Ebene. Die Ebene, in welcher sich das Fahrzeugsitzoberteil 2 erstreckt, kann durch die Vektoren A1 und A2 beschrieben werden. Die Ebene, in welcher sich das Fahrzeugsitzunterteil 3 erstreckt, kann durch die Vektoren A3 und A4 beschrieben werden. In einer Ausgangsposition, in welcher das Fahrzeugsitzoberteil 2 und das Fahrzeugsitzunterteil 3 parallel zu einander angeordnet sind, wären die Vektoren A2 und A4 parallel zu der Breitenachse Y und die Vektoren A1 und A3 parallel zu der Längsachse X angeordnet. Bei einer Wankbewegung weisen die Vektoren A2 und A4 einen Winkel θ ≠ 0°, 180° auf. Dies ist beispielsweise in Figur 11 dargestellt, wobei die Vektoren A1 und A3 in die Zeichenebene gerichtet sind. Bei einer Wankbewegung ändert sich demnach ein Abstand zwischen der Schwenkachse 19b bezüglich einer oberen Anbindung eines Dämpferelements 11, 12, 13, 14 an dem zweiten Verbindungselement 10 und der Schwenkachse 19a bezüglich einer unteren Anbindung eines Dämpferelements 11, 12, 13, 14 an dem Fahrzeugsitzunterteil 3. Demnach werden die Dämpferelemente 11, 12, 13, 14 entsprechend verkürzt oder verlängert, wodurch die Wankbewegung gedämpft wird.

Die unteren Loslagerungen 20, 21 der zumindest einen Innenschwinge 5, 5a und der zumindest einen Außenschwinge 6, 6a umfassen zumindest ein Aufnahmeelement 27, welches um die dritte Drehachse 18 relativ zu dem Fahrzeugsitzunterteil 3 schwenkbar ist. In Figur 18 ist eine Ausführungsform gezeigt, in welcher das Aufnahmeelement 27 und Führungselement 30a ausgebildet ist, in welchen die unteren Lagerrollen 28a, 29a geführt werden. Das Führungselement ist als ein im wesentlichen plattenartiges Element ausgebildet, welches sich entlang der Längserstreckung des Fahrzeugsitzunterteils 3 erstreckt und im Wesentlichen mittig an diesem angeordnet ist. Das Fahrzeugsitzunterteil 3 weist dabei an seinen beiden Längsseiten jeweils ein Befestigungselement 44 auf. An diesem Befestigungselement 44 ist das Führungselement 30a mittels einer jeweiligen Drehlagerung drehbar um die dritte Drehachse 18 gelagert. An dem Befestigungselement 44 sind weiterhin seitlich die Aufnahmen 45 angeordnet oder in diesem integriert, an welchen die Dämpfungselemente 11, 12, 13, 14 schwenkbar angeordnet sind. Die untere Festlagerung 25 ist ebenso an dem plattenartigen Element angeordnet.

Nach der Ausführungsform gemäß Figur 5 sind keine untere Lagerungsrollen 28a, 29a vorgesehen. Die zumindest eine Innenschwinge 5, 5a und die zumindest eine Außenschwinge 6, 6a sind jeweils mit einem Gleitelement 46 verbunden, welches auf einer durchgehenden Gleitschiene 47 entlang der Längsrichtung X gleiten kann. Die Gleitschiene 47 ist mit dem Halterungselement 48 verbunden und erstreckt sich entlang der dritten Drehachse 18. Bei einer Wankbewegung können die Gleitelement 46 um die dritte Drehachse 18, beziehungsweise die feste Gleitschiene 47 gedreht werden. Das untere Festlager 25 ist ebenso mit der Gleitschiene 47 verbunden. In einer weiteren Ausführungsform (hier nicht gezeigt) ist die Gleitschiene als drehmomentübertragende 4-Kantwelle ausgeführt. Diese 4-Kantwelle ist dann an dem Halterungselement 48, beziehungsweise dessen Aufnahmen drehbar gelagert. Bei dieser Ausführungsform trifft dann zu, dass die Gleitelemente 46 auf der Gleitschiene 47 die x- Bewegung ausführen und die Wankbewegung durch Verdrehung der Gleitschiene 47 realisiert wird.

In Figur 15a ist die Frontansicht des Fahrzeugsitzes 1 dargestellt. Ferner ist ein projizierter Anstellwinkel β dargestellt. Der projizierte Anstellwinkel β in die Ebene der Vorderansicht bestimmt hauptsächlich die Aufteilung der Dämpferkräfte in die Komponenten um eine Wankachse, beziehungsweise um die dritte Drehachse 18 und in vertikaler Richtung. In Figur 16a ist eine Seitenansicht des Fahrzeugsitzes 1 dargestellt. Ferner ist ein projizierter Anstellwinkel γ dargestellt. Der projizierte Anstellwinkel γ in die Ebene der Seitenansicht bestimmt hauptsächlich die Aufteilung der Dämpferkräfte in die Komponenten um die Nickachse und in vertikaler Richtung. Demnach ist ersichtlich, dass die Dämpferkräfte der Dämpfungselemente 11, 12, 13, 14 sich abhängig vom Anstellwinkel α in die jeweiligen Komponenten bezüglich einer Wankbewegung, einer Nickbewegung und einer vertikalen Bewegung aufteilen.

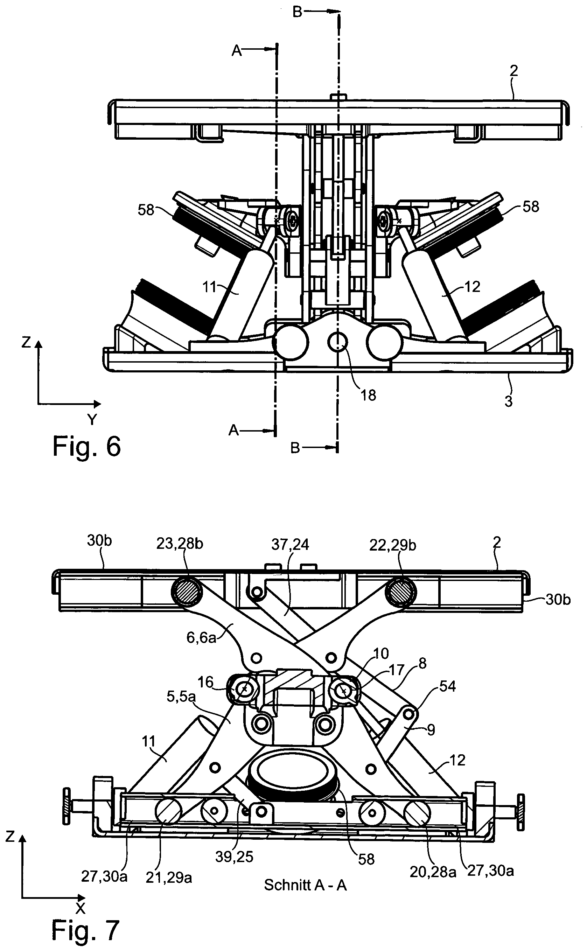

Um eine entsprechende Rückstellung der Nickbewegung, der Wankbewegung und der vertikalen Bewegung zu ermöglichen können, parallel zu den Dämpfungselementen 11, 12, 13, 14, Federelement 49 zwischen dem Verbindungselement 7 und dem Fahrzeugsitzunterteil 3 angeordnet sein. Die Anordnung und die Funktion der Federelemente 49 kann analog zu den Dämpferelementen 11, 12, 13, 14 beschrieben werden mit dem Unterschied, dass anstelle der dissipativen Funktion eine Rückstellung bewirkt wird. In den Figuren 6 bis 10 sind Aufnahmen 58 für diese Federelemente 49, welche ebenso geneigt zu der ersten Achse 15 angeordnet sind, dargestellt. In Figur 1 sind die geneigt angeordneten Federelement 49 dargestellt.

### Bezugszeichenliste

- 1: Fahrzeugsitz
- 2: Fahrzeugsitzoberteil
- 3: Fahrzeugsitzunterteil
- 4: Scherengestellanordnung
- 5: zumindest eine Innenschwinge
- 5a: Innenschwingenpaar
- 6: zumindest eine Außenschwinge
- 6a: Außenschwingenpaar
- 7: mechanische Kopplung
- 8: Armelement
- 8a: Mittelachse des Armelements
- 9: erstes Verbindungselement
- 9a: Mittelachse des ersten Verbindungselements
- 10: zweites Verbindungselement
- 11: Dämpfungselement
- 11a: Mittelachse des Dämpfungselements
- 12: Dämpfungselement
- 12a: Mittelachse des Dämpfungselements
- 13: Dämpfungselement
- 13a: Mittelachse des Dämpfungselements
- 14: Dämpfungselement
- 14a: Mittelachse des Dämpfungselements
- 15: erste Achse
- 16: erste Drehachse
- 17: zweite Drehachse
- 18: dritte Drehachse
- 19a: Schwenkachse
- 19b: Schwenkachse
- 20: untere Loslagerung des Außenschwingenpaars
- 21: untere Loslagerung des Innenschwingenpaars
- 22: obere Loslagerung des Außenschwingenpaars
- 23: obere Loslagerung des Innenschwingenpaars
- 24: obere Festlagerung
- 25: untere Festlagerung
- 26: Nickachse
- 27: Aufnahmeelement
- 28a: untere Lagerrollen
- 28b: obere Lagerrollen
- 29a: untere Lagerrollen
- 29b: obere Lagerrollen
- 30a: unteres Führungselement
- 30b: oberes Führungselement
- 31: Aktor
- 32: Steuerungseinrichtung
- 33a: unterer Schwingenbolzen
- 33b: oberer Schwingenbolzen
- 34a: oberer Schwingenbolzen
- 34b: unterer Schwingenbolzen
- 35: Sitzpolster
- 36: Rückenlehne
- 37: Hebelarm
- 38: vierte Drehachse
- 39: Hebelarm
- 40: fünfte Drehachse
- 41: Mittellagerbohrungen
- 42: weiteres Verbindungselement
- 43: Aufnahmen des Verbindungselements
- 44: Befestigungselement
- 45: Aufnahmen
- 46: Gleitelement
- 47: Gleitschiene
- 48: Halterungselement
- 49: Federelement
- 50: Sensor
- 51: Feder-/ Dämpferelement
- 52: fiktives Trapez
- 53: fiktiver Pyramidenstumpf
- 54: sechste Drehachse
- 55: siebte Drehachse
- 56: achte Drehachse
- 57: Bedieneinrichtung
- 58: Aufnahme
- A1: Vektor
- A2: Vektor
- A3: Vektor
- A4: Vektor
- K: Kreuzungsbereich
- L: Länge des ersten Verbindungselements
- M: Mittelachse
- Z: Höhenachse
- X: Längsachse
- Y: Breitenachse
- α: Anstellwinkel
- β: Winkel
- γ: Winkel
- θ: Winkel
- ξ: Neigungswinkel
- µ: Winkel
- λ: Winkel

## Patentansprüche

1. Fahrzeugsitz (1) umfassend ein Fahrzeugsitzoberteil (2) und ein Fahrzeugsitzunterteil (3), welche entlang einer Höhenachse (Z) voneinander beabstandet sind und mittels einer Scherengestellanordnung (4) miteinander verbunden sind, wobei die Scherengestellanordnung (4) zumindest eine Innenschwinge (5, 5a) und zumindest eine Außenschwinge (6, 6a) umfasst,
wobei die zumindest eine Innenschwinge (5, 5a) und die zumindest eine Außenschwinge (6, 6a) mechanisch gekoppelt sind, wodurch ein Neigungswinkel (ξ) des Fahrzeugsitzoberteils (2) relativ zum Fahrzeugsitzunterteil (3) vorgebbar ist, wobei die mechanische Kopplung (7) ein Armelement (8) und ein damit schwenkbar verbundenes erstes Verbindungselement (9) umfasst, wobei durch eine Länge (L) des ersten Verbindungselements (9) der Neigungswinkel (ξ) vorgebbar ist
**dadurch gekennzeichnet, dass**
die zumindest eine Innenschwinge (5, 5a) und die zumindest eine Außenschwinge (6, 6a) jeweils mittels zumindest einer unteren Loslagerung (20, 21) an dem Fahrzeugsitzunterteil (3) angeordnet sind, wobei die zumindest eine Innenschwinge (5, 5a) und die zumindest eine Außenschwinge (6, 6a) jeweils mittels zumindest einer oberen Loslagerung (22, 23) an dem Fahrzeugsitzoberteil (2) angeordnet sind, wobei die zumindest eine Innenschwinge (5, 5a) oder die zumindest eine Außenschwinge (6, 6a) mittels einer unteren Festlagerung (25) mit dem Fahrzeugsitzunterteil (3) verbunden ist, wobei die zumindest eine Innenschwinge (5, 5a) oder die zumindest eine Außenschwinge (6, 6a) mittels einer oberen Festlagerung (24) mit dem Fahrzeugsitzoberteil (2) verbunden ist.

2. Fahrzeugsitz(1) nach Anspruch 1,
**dadurch gekennzeichnet, dass**
das Armelement (8) an der zumindest einen Innenschwinge (5, 5a) angeordnet ist und das erste Verbindungselement (9) an der zumindest einen Außenschwinge (6, 6a) oder das Armelement (8) an der zumindest einen Außenschwinge (6, 6a) angeordnet ist und das erste Verbindungselement (9) an der zumindest einen Innenschwinge (5, 5a), wobei das Armelement (8) drehbar an der zumindest einen Innenschwinge (5, 5a) oder der zumindest einen Außenschwinge (6, 6a) angeordnet ist wobei das erste Verbindungselement (9) drehbar an der zumindest einen Innenschwinge (5, 5a) oder der zumindest einen Außenschwinge (6, 6a) angeordnet ist.

3. Fahrzeugsitz (1) nach Anspruch 1 oder 2,
**dadurch gekennzeichnet, dass**
die zumindest eine Innenschwinge (5, 5a) und die zumindest eine Außenschwinge (6, 6a) durch ein zweites Verbindungselement (10) verbunden sind, welches um jeweils eine sich entlang einer Breitenrichtung (Y) erstreckende Drehachse (16, 17) relativ zu der zumindest einen Innenschwinge (5, 5a) und relativ zu der zumindest einen Außenschwinge (6, 6a) drehbar ist, wobei die zumindest eine Innenschwinge (5, 5a) und die zumindest eine Außenschwinge (6, 6a) sich in einem Kreuzungsbereich (K) kreuzen, wobei zumindest in einer Ruheposition die erste Drehachse (16) und die zweite Drehachse (17) entlang der Höhenachse (Z) über dem Kreuzungsbereich (K) oder entlang der Höhenachse (Z) unter dem Kreuzungsbereich (K) angeordnet sind, wobei zumindest in einer Ruheposition die erste Drehachse (16) und die zweite Drehachse (17) einen vorgegebenen Abstand entlang der Höhenachse (Z) zu dem Fahrzeugsitzunterteil (3) aufweisen, wobei bei einer Nickbewegung das Fahrzeugsitzoberteil (2) um eine Nickachse (26) relativ zu dem Fahrzeugsitzunterteil (3) verkippt ist, wobei bei dieser Nickbewegung das zweite Verbindungselement (10) um die erste Drehachse (16) und um die zweite Drehachse (17) gedreht wird.

4. Fahrzeugsitz (1) nach einem der vorhergehenden Ansprüche,
**dadurch gekennzeichnet, dass**
das erste Verbindungselement (9) eine feste Länge (L) aufweist oder in seiner Länge (L) modifizierbar ist, wobei das erste Verbindungselement (9) einen Aktor (31) umfasst, mittels welchem die Länge (L) einstellbar ist, wobei der Aktor (31) ein elektrischer, pneumatischer oder hydraulischer Aktor (31) ist.

5. Fahrzeugsitz (1) nach Anspruch 4,
**dadurch gekennzeichnet, dass**
eine Steuerungseinrichtung (32) vorgesehen ist, welche den Aktor (31) ansteuert, wobei zumindest ein Sensor (50) vorgesehen ist, welcher dazu geeignet und dafür vorgesehen ist, Nickschwingungen des Fahrzeugsitzoberteils (2) zu detektieren, wobei eine aktive Federung von Nickschwingungen des Fahrzeugsitzoberteils (2) durch die Ansteuerung des Aktors (31) erfolgt.

6. Fahrzeugsitz (1) nach einem der Ansprüche 1 bis 4,
**dadurch gekennzeichnet, dass**
das erste Verbindungselement (9) ein Federelement oder Feder-/Dämpferelement (51) umfasst, wodurch eine passive oder eine semiaktive Federung/Dämpfung von Nickschwingungen des Fahrzeugsitzoberteils (2) ermöglicht ist.

7. Fahrzeugsitz (1) nach einem der vorhergehenden Ansprüche,
**dadurch gekennzeichnet, dass**
die zumindest eine Innenschwinge (5, 5a) und die zumindest eine Außenschwinge (6, 6a) um eine sich entlang einer Längsrichtung (X) erstreckende dritte Drehachse (18) relativ zu dem Fahrzeugsitzunterteil (3) schwenkbar angeordnet sind, wobei bei einer Wankbewegung die zumindest eine Innenschwinge (5, 5a), die zumindest eine Außenschwinge (6, 6a) und das Fahrzeugsitzoberteil (2) um die dritte Drehachse (18) relativ zu dem Fahrzeugsitzunterteil (3) verschwenkt sind.

8. Fahrzeugsitz (1) nach Anspruch 3,
**dadurch gekennzeichnet, dass**
zumindest zwei Dämpfungselemente (11, 12, 13, 14) zwischen dem Fahrzeugsitzoberteil (2) und dem Fahrzeugsitzunterteil (3) angeordnet sind, welche sich jeweils bezüglich einer zur Höhenachse (Z) parallelen ersten Achse (15) in einem Anstellwinkel (α) geneigt erstrecken, wobei zwischen dem Fahrzeugsitzunterteil (3) und dem zweiten Verbindungselement (10) vier Dämpfungselemente (11, 12, 13, 14) angeordnet sind, wobei in einer Ruheposition des Fahrzeugsitzes (1) jeweils zwei Dämpfungselemente (11, 12, 13, 14) die Schenkel eines fiktiven Trapezes (52) ausbilden.

9. Fahrzeugsitz (1) nach Anspruch 8,
**dadurch gekennzeichnet, dass**
bei einer Vertikalbewegung des Fahrzeugsitzoberteils (2) relativ zu dem Fahrzeugsitzunterteil (3) das zweite Verbindungselement (10) entlang der Höhenachse (Z) verlagert ist, wobei der Anstellwinkel (α) der Dämpfungselemente (11, 12, 13, 14) abhängig ist von einer vertikalen Position des Fahrzeugsitzoberteils (2) relativ zu dem Fahrzeugsitzunterteil (3), wobei der Anstellwinkel (α) sich zwischen einer Mittelachse (11a, 12a, 13a, 14a) des jeweiligen Dämpfungselements (11, 12, 13, 14) und der ersten Achse (15) erstreckt und aus einem Bereich zwischen 10° und 80° gewählt ist.

10. Fahrzeugsitz (1) nach einem Ansprüche 1 bis 9,
**dadurch gekennzeichnet, dass**
die unteren Loslagerungen (20, 21) der zumindest einen Innenschwinge (5, 5a) und der zumindest einen Außenschwinge (6, 6a) zumindest ein Aufnahmeelement (27) umfassen, wobei das zumindest eine Aufnahmeelement (27) um die dritte Drehachse (18) relativ zu dem Fahrzeugsitzunterteil (3) schwenkbar ist, wobei die unteren Loslagerungen (20, 21) untere Lagerrollen (28a, 29a) umfassen, wobei das zumindest eine Aufnahmeelement (27) als ein Führungselement (30a) ausgebildet ist, in welchem die unteren Lagerrollen (28a, 29a) entlang der Längsrichtung (X) geführt sind.

## Claims

1. Vehicle seat (1) comprising a vehicle seat upper part (2) and a vehicle seat lower part (3), which are spaced apart from one another along a height axis (Z) and are connected to one another by means of a scissor frame arrangement (4), wherein the scissor frame arrangement (4) comprises at least one inner swinging arm (5, 5a) and at least one outer swinging arm (6, 6a)
wherein the at least one inner swinging arm (5, 5a) and the at least one outer swinging arm (6, 6a) are mechanically coupled, whereby an angle of inclination (ξ) of the vehicle seat upper part (2) relative to the vehicle seat lower part (3) can be predetermined, wherein the mechanical coupling (7) comprises an arm element (8) and a first connecting element (9) pivotably connected thereto, wherein the angle of inclination (ξ) can be predetermined by a length (L) of the first connecting element (9) **characterised in that**
the at least one inner swinging arm (5, 5a) and the at least one outer swinging arm (6, 6a) are each arranged on the vehicle seat lower part (3) by means of at least one lower floating bearing (20, 21), wherein the at least one inner swinging arm (5, 5a) and the at least one outer swinging arm (6, 6a) are each arranged on the vehicle seat upper part (2) by means of at least one upper floating bearing (22, 23), wherein the at least one inner swinging arm (5, 5a) or the at least one outer swinging arm (6, 6a) is connected to the vehicle seat lower part (3) by means of a lower fixed bearing (25), wherein the at least one inner swinging arm (5, 5a) or the at least one outer swinging arm (6, 6a) is connected to the vehicle seat upper part (2) by means of an upper fixed bearing (24).

2. Vehicle seat(1) according to claim 1,
**characterised in that**
the arm element (8) is arranged on the at least one inner swinging arm (5, 5a) and the first connecting element (9) is arranged on the at least one outer swinging arm (6, 6a) or the arm element (8) is arranged on the at least one outer swinging arm (6, 6a) and the first connecting element (9) is arranged on the at least one inner swinging arm (5, 5a), wherein the arm element (8) is arranged rotatably on the at least one inner swinging arm (5, 5a) or the at least one outer swinging arm (6, 6a), wherein the first connecting element (9) is arranged rotatably on the at least one inner swinging arm (5, 5a) or the at least one outer swinging arm (6, 6a).

3. Vehicle seat (1) according to claim 1 or 2,
**characterised in that**
the at least one inner swinging arm (5, 5a) and the at least one outer swinging arm (6, 6a) are connected by a second connecting element (10) which can be rotated about an axis of rotation (16, 17) extending along a width axis (Y) relative to the at least one inner swinging arm (5, 5a), 17) relative to the at least one inner swinging arm (5, 5a) and relative to the at least one outer swinging arm (6, 6a), wherein the at least one inner swinging arm (5, 5a) and the at least one outer swinging arm (6, 6a) intersect in an intersection region (K), wherein, at least in a rest position, the first axis of rotation (16) and the second axis of rotation (17) are arranged along the height axis (Z) above the intersection region (K) or along the height axis (Z) below the intersection region (K), wherein, at least in a rest position, the first axis of rotation (16) and the second axis of rotation (17) are at a predetermined distance along the height axis (Z) from the vehicle seat lower part (3), wherein during a pitching movement the vehicle seat upper part (2) is tilted about a pitch axis (26) relative to the vehicle seat lower part (3), wherein during this pitching movement the second connecting element (10) is rotated about the first axis of rotation (16) and about the second axis of rotation (17).

4. Vehicle seat (1) according to one of the preceding claims,
**characterised in that**
the first connecting element (9) has a fixed length (L) or is modifiable in its length (L), wherein the first connecting element (9) comprises an actuator (31) by means of which the length (L) is adjustable, wherein the actuator (31) is an electric, pneumatic or hydraulic actuator (31).

5. Vehicle seat (1) according to claim 4,
**characterised in that**
a control device (32) is provided which controls the actuator (31), wherein at least one sensor (50) is provided which is suitable and intended for detecting pitching vibrations of the vehicle seat upper part (2), wherein an active suspension of pitching vibrations of the vehicle seat upper part (2) is achieved by controlling the actuator (31).

6. Vehicle seat (1) according to one of claims 1 to 4,
**characterised in that**
the first connecting element (9) comprises a spring element or spring/damper element (51), whereby a passive or semi-active suspension/damping of pitching vibrations of the vehicle seat upper part (2) is enabled.

7. Vehicle seat (1) according to any of the preceding claims,
**characterised in that**
the at least one inner swinging arm (5, 5a) and the at least one outer swinging arm (6, 6a) are arranged pivotably on a third axis of rotation (18) extending along a longitudinal axis (X) relative to the vehicle seat lower part (3), wherein, during a rolling movement, the at least one inner swinging arm (5, 5a), the at least one outer swinging arm (6, 6a) and the vehicle seat upper part (2) are pivoted about the third axis of rotation (18) relative to the vehicle seat lower part (3).

8. Vehicle seat (1) according to claim 3,
**characterised in that**
at least two damping elements (11, 12, 13, 14) are arranged between the vehicle seat upper part (2) and the vehicle seat lower part (3), which each extend at an angle of inclination (α) with respect to a first axis (15) parallel to the height axis (Z), wherein four damping elements (11, 12, 13, 14) are arranged between the vehicle seat lower part (3) and the second connecting element (10), wherein in a rest position of the vehicle seat (1) two damping elements (11, 12, 13, 14) each form the legs of an imaginary trapezoid (52).

9. Vehicle seat (1) according to claim 8,
**characterised in that**
during a vertical movement of the vehicle seat upper part (2) relative to the vehicle seat lower part (3), the second connecting element (10) is displaced along the height axis (Z), wherein the angle of attack (α) of the damping elements (11, 12, 13, 14) is dependent on a vertical position of the vehicle seat upper part (2) relative to the vehicle seat lower part (3), wherein the angle of attack (α) extends between a central axis (11a, 12a, 13a, 14a) of the respective damping element (11, 12, 13, 14) and the first axis (15) and is selected from a range between 10° and 80°.

10. Vehicle seat (1) according to any one of claims 1 to 9,
**characterised in that**
the lower floating bearings (20, 21) of the at least one inner swinging arm (5, 5a) and of the at least one outer swinging arm (6, 6a) comprise at least one receiving element (27), wherein the at least one receiving element (27) is pivotable about the third axis of rotation (18) relative to the vehicle seat lower part (3), wherein the lower loose bearings (20, 21) comprise lower bearing rollers (28a, 29a), wherein the at least one receiving element (27) is designed as a guide element (30a) in which the lower bearing rollers (28a, 29a) are guided along the longitudinal axis (X).

## Revendications

1. Siège de véhicule (1) comportant une partie supérieure de siège de véhicule (2) et une partie inférieure de siège de véhicule (3), lesquelles sont espacées l'une de l'autre le long d'un axe de hauteur (Z) et sont reliées l'une à l'autre au moyen d'un agencement de cadre à ciseaux (4), l'agencement de cadre à ciseaux (4) comportant au moins un bras oscillant intérieur (5, 5a) et au moins un bras oscillant extérieur (6, 6a),
ledit au moins un bras oscillant intérieur (5, 5a) et ledit au moins un bras oscillant extérieur (6, 6a) étant couplés mécaniquement, ce par quoi un angle d'inclinaison (ξ) de la partie supérieure de siège de véhicule (2) par rapport à la partie inférieure de siège de véhicule (3) est prédéfinissable, le couplage mécanique (7) comportant un élément bras (8) et un premier élément de liaison (9) relié de manière pivotante à celui-ci, l'angle d'inclinaison (ξ) étant prédéfinissable par une longueur (L) du premier élément de liaison (9),
**caractérisé par le fait que**
ledit au moins un bras oscillant intérieur (5, 5a) et ledit au moins un bras oscillant extérieur (6, 6a) sont disposés chacun sur la partie inférieure de siège de véhicule (3) au moyen d'au moins un palier libre inférieur (20, 21), ledit au moins un bras oscillant intérieur (5, 5a) et ledit au moins un bras oscillant extérieur (6, 6a) étant disposés chacun sur la partie supérieure de siège de véhicule (2) au moyen d'au moins un palier libre supérieur (22, 23), ledit au moins un bras oscillant intérieur (5, 5a) ou ledit au moins un bras oscillant extérieur (6, 6a) étant relié à la partie inférieure de siège de véhicule (3) au moyen d'un palier fixe inférieur (25), ledit au moins un bras oscillant intérieur (5, 5a) ou ledit au moins un bras oscillant extérieur (6, 6a) étant relié à la partie supérieure de siège de véhicule (2) au moyen d'un palier fixe supérieur (24).

2. Siège de véhicule (1) selon la revendication 1,
**caractérisé par le fait que**
l'élément bras (8) est disposé sur ledit au moins un bras oscillant intérieur (5, 5a) et le premier élément de liaison (9) est disposé sur ledit au moins un bras oscillant extérieur (6, 6a) ou l'élément bras (8) est disposé sur ledit au moins un bras oscillant extérieur (6, 6a) et le premier élément de liaison (9) est disposé sur ledit au moins un bras oscillant intérieur (5, 5a), l'élément bras (8) étant disposé de manière rotative sur ledit au moins un bras oscillant intérieur (5, 5a) ou sur ledit au moins un bras oscillant extérieur (6, 6a), le premier élément de liaison (9) étant disposé de manière rotative sur ledit au moins un bras oscillant intérieur (5, 5a) ou sur ledit au moins un bras oscillant extérieur (6, 6a).

3. Siège de véhicule (1) selon l'une des revendications 1 ou 2,
**caractérisé par le fait que**
ledit au moins un bras oscillant intérieur (5, 5a) et ledit au moins un bras oscillant extérieur (6, 6a) sont reliés par un second élément de liaison (10), lequel est apte à tourner autour dans chaque cas d'un axe de rotation (16, 17) s'étendant le long d'une direction de largeur (Y) par rapport audit au moins un bras oscillant intérieur (5, 5a) et par rapport audit au moins un bras oscillant extérieur (6, 6a), ledit au moins un bras oscillant intérieur (5, 5a) et ledit au moins un bras oscillant extérieur (6, 6a) se croisant dans une région de croisement (K), le premier axe de rotation (16) et le deuxième axe de rotation (17) étant disposés, au moins dans une position de repos, le long de l'axe de hauteur (Z) au-dessus de la région de croisement (K) ou le long de l'axe de hauteur (Z) au-dessous de la région de croisement (K), le premier axe de rotation (16) et le second axe de rotation (17) présentant une distance prédéterminée, au moins dans une position de repos, le long de l'axe de hauteur (Z) par rapport à la partie inférieure de siège de véhicule (3), la partie supérieure de siège de véhicule (2) étant basculée autour d'un axe de tangage (26) par rapport à la partie inférieure de siège de véhicule (3) lors d'un mouvement de tangage, le second élément de liaison (10) étant tourné autour du premier axe de rotation (16) et autour du deuxième axe de rotation (17) lors de ce mouvement de tangage.

4. Siège de véhicule (1) selon l'une des revendications précédentes,
**caractérisé par le fait que**
le premier élément de liaison (9) présente une longueur fixe (L) ou est modifiable dans sa longueur (L), le premier élément de liaison (9) comportant un actionneur (31) au moyen duquel la longueur (L) est ajustable, l'actionneur (31) étant un actionneur électrique, pneumatique ou hydraulique (31).

5. Siège de véhicule (1) selon la revendication 4,
**caractérisé par le fait qu'**
un dispositif de commande (32) est prévu, lequel commande l'actionneur (31), au moins un capteur (50) étant prévu, lequel est approprié à et destiné à détecter des vibrations de tangage de la partie supérieure de siège de véhicule (2), un amortissement actif des vibrations de tangage de la partie supérieure de siège de véhicule (2) ayant lieu par la commande de l'actionneur (31).

6. Siège de véhicule (1) selon l'une des revendications 1 à 4,
**caractérisé par le fait que**
le premier élément de liaison (9) comporte un élément ressort ou élément ressort/amortisseur (51), ce par quoi un amortissement passif ou semi-actif des vibrations de tangage de la partie supérieure de siège de véhicule (2) est rendu possible.

7. Siège de véhicule (1) selon l'une des revendications précédentes,
**caractérisé par le fait que**
ledit au moins un bras oscillant intérieur (5, 5a) et ledit au moins un bras oscillant extérieur (6, 6a) sont disposés de manière à pouvoir pivoter par rapport à la partie inférieure de siège de véhicule (3) autour d'un troisième axe de rotation (18) s'étendant le long d'une direction longitudinale (X), ledit au moins un bras oscillant intérieur (5, 5a), ledit au moins un bras oscillant extérieur (6, 6a) et la partie supérieure de siège de véhicule (2) pivotant autour du troisième axe de rotation (18) par rapport à la partie inférieure de siège de véhicule (3) lors d'un mouvement de roulis.

8. Siège de véhicule (1) selon la revendication 3,
**caractérisé par le fait qu'**
au moins deux éléments amortisseurs (11, 12, 13, 14) sont disposés entre la partie supérieure de siège de véhicule (2) et la partie inférieure de siège de véhicule (3), chacun d'eux s'étendant respectivement de manière inclinée selon un angle d'attaque (α) par rapport à un premier axe (15) parallèle à l'axe de hauteur (Z), quatre éléments amortisseurs (11, 12, 13, 14) étant disposés entre la partie inférieure de siège de véhicule (3) et le second élément de liaison (10), deux éléments amortisseurs (11, 12, 13, 14) dans chaque cas formant les côtés d'un trapèze fictif (52) dans une position de repos du siège de véhicule (1).

9. Siège de véhicule (1) selon la revendication 8,
**caractérisé par le fait que**
lors d'un mouvement vertical de la partie supérieure de siège de véhicule (2) par rapport à la partie inférieure de siège de véhicule (3), le second élément de liaison (10) est déplacé le long de l'axe de hauteur (Z), l'angle d'attaque (α) des éléments amortisseurs (11, 12, 13, 14) étant dépendant d'une position verticale de la partie supérieure de siège de véhicule (2) par rapport à la partie inférieure de siège de véhicule (3), l'angle d'attaque (α) s'étendant entre un axe central (11a, 12a, 13a, 14a) de l'élément amortisseur respectif (11, 12, 13, 14) et le premier axe (15) et étant choisi dans une plage entre 10° et 80°.

10. Siège de véhicule (1) selon l'une des revendications 1 à 9,
**caractérisé par le fait que**
les paliers libres inférieurs (20, 21) dudit au moins un bras oscillant intérieur (5, 5a) et dudit au moins un bras oscillant extérieur (6, 6a) comportent au moins un élément de réception (27), ledit au moins un élément de réception (27) étant apte à pivoter autour d'un troisième axe de rotation (18) par rapport à la partie inférieure de siège de véhicule (3), les paliers libres inférieurs (20, 21) comportant des galets de roulement inférieurs (28a, 29a), ledit au moins un élément de réception (27) étant conçu comme un élément de guidage (30a), dans lequel les galets de roulement inférieurs (28a, 29a) sont guidés le long de la direction longitudinale (X).
